# EUROPEAN PATENT APPLICATION

(11) **EP 4 668 897 A1**
(43) Date of publication of application: **24.12.2025**
(21) Application number: 24774121.8
(22) Date of filing: 19.03.2024
(51) Int. Cl.: H04W 52/02

(54) **COMMUNICATION METHOD, APPARATUS, AND SYSTEM**

(30) Priority: 20.03.2023 CN 202310280047
(71) Applicant: Huawei Technologies Co., Ltd., Shenzhen, Guangdong 518129 (CN)
(72) Inventor: MA, Siqi, Shenzhen, Guangdong 518129 (CN); YU, Zheng, Shenzhen, Guangdong 518129 (CN); ZHANG, Yangyang, Shenzhen, Guangdong 518129 (CN); LIU, Xiaoqing, Shenzhen, Guangdong 518129 (CN)
(74) Representative: Goddar, Heinz J.
(86) International application number: PCT/CN2024/082527
(87) International publication number: WO 2024/193556

(57) **Abstract**

This application provides a communication method, apparatus, and system, and is applied to the field of communication technologies. The communication method provided in this application includes: determining a first condition that a terminal device supporting a low power wake-up receiver LP-WUS paging mode in a first cell needs to meet to perform the LP-WUS paging mode; and sending first indication information to the terminal device, where the first indication information indicates the first condition. Based on the communication method provided in this application, a network device may indicate, to the terminal device, the first condition that the terminal device supporting the LP-WUS paging mode in the first cell needs to meet to perform the LP-WUS paging mode, to avoid that all terminal devices supporting the LP-WUS paging mode in the first cell perform the LP-WUS paging mode or none of the terminal devices performs the LP-WUS paging mode, thereby meeting a requirement of the terminal device for low power consumption as far as possible without reducing performance of a network side.

## Description

This application claims priority to Chinese Patent Application No. 202310280047.7, filed with the China National Intellectual Property Administration on March 20, 2023 and entitled "COMMUNICATION METHOD, APPARATUS, AND SYSTEM", which is incorporated herein by reference in its entirety.

### TECHNICAL FIELD

This application relates to the wireless communication field, and in particular, to a communication method, apparatus, and system.

### BACKGROUND

In a wireless communication system, to reduce energy overheads of a terminal device in a process of blindly detecting a paging (paging) message, a low power wake-up receiver (low power wake-up receiver, LP-WUR) may be additionally deployed on the terminal device. For example, a network side may deliver a group of paging messages to page the terminal device, and the group of paging messages may be received by the low power wake-up receiver, that is, the LP-WUR, of the terminal device. After the LP-WUR determines that the paging messages sent to the terminal device are received, the terminal device wakes up a main receiver to perform a subsequent operation.

However, a current paging process based on the LP-WUR still has some disadvantages to be improved. For example, generally, an LP-WUS paging mode is beneficial to energy saving of the terminal device, but spectrum utilization is low, that is, utilization of a time-frequency resource on the network side is low. Therefore, from a perspective of energy saving on a terminal device side, a terminal device that supports the LP-WUS paging mode expects that the network side pages the terminal device in an LP-WUS form. However, if a large quantity of terminal devices perform the LP-WUS paging mode, great pressure is caused for load of a cell on the network side. Currently, a network device notifies, by using configuration information in a system message, a terminal device whether a cell supports the LP-WUS paging mode. In other words, it is specified that the entire cell either supports the LP-WUS paging mode or does not support the LP-WUS paging mode. This configuration manner cannot achieve a balance between a time-frequency resource saving requirement on the network side and an energy saving requirement on the terminal device side.

### SUMMARY

Embodiments of this application provide a communication method, apparatus, and system, to resolve some disadvantages in a paging process based on an LP-WUR.

To achieve the foregoing objective, the following technical solutions are used in embodiments of this application.

According to a first aspect, a communication method is provided. The method may be performed by a network device, or may be performed by a component (for example, a processor, a chip, or a chip system) of the network device, or may be performed by an apparatus including the network device. The following describes the method by using an example in which the network device performs the method. The method includes: The network device determines a first condition that a terminal device supporting a low power wake-up receiver LP-WUS paging mode in a first cell needs to meet to perform the LP-WUS paging mode. The network device sends first indication information to the terminal device, where the first indication information indicates the first condition.

Based on the communication method provided in this embodiment of this application, the network device may indicate, to the terminal device, the first condition that the terminal device supporting the LP-WUS paging mode in the first cell needs to meet to perform the LP-WUS paging mode, that is, only a terminal device that meets the first condition can perform the LP-WUS paging mode, to avoid that all terminal devices perform the LP-WUS paging mode or none of the terminal devices performs the LP-WUS paging mode, thereby meeting a requirement of the terminal device for low power consumption as far as possible without reducing performance of a network side.

With reference to the first aspect, in a possible design, that the network device determines the first condition that the terminal device supporting the low power wake-up receiver LP-WUS paging mode in the first cell needs to meet to perform the LP-WUS paging mode includes: The network device determines the first condition based on a relationship between load of the first cell and a preset threshold.

According to a second aspect, a communication method is provided. The method may be performed by a terminal device, or may be performed by a component (for example, a processor, a chip, or a chip system) of the terminal device, or may be performed by an apparatus including the terminal device. The following describes the method by using an example in which the terminal device performs the method. The method includes: The terminal device receives first indication information, where the first indication information indicates a first condition that a terminal device supporting a low power wake-up receiver LP-WUS paging mode in a first cell needs to meet to perform the LP-WUS paging mode.

Based on the communication method provided in this embodiment of this application, a network device may indicate, to the terminal device, the first condition that the terminal device supporting the LP-WUS paging mode in the first cell needs to meet to perform the LP-WUS paging mode, that is, only a terminal device that meets the first condition can perform the LP-WUS paging mode, to avoid that all terminal devices perform the LP-WUS paging mode or none of the terminal devices performs the LP-WUS paging mode, thereby meeting a requirement of the terminal device for low power consumption as far as possible without reducing performance of a network side.

With reference to the first aspect or the second aspect, in a possible design, the first condition includes: supporting the LP-WUS paging mode.

With reference to the first aspect or the second aspect, in a possible design, the first condition includes: An identification number of the terminal device meets a preset relationship.

With reference to the first aspect or the second aspect, in a possible design, the first condition includes: The terminal device has an energy saving requirement.

According to a third aspect, a communication method is provided. The method may be performed by a network device, or may be performed by a component (for example, a processor, a chip, or a chip system) of the network device, or may be performed by an apparatus including the network device. The following describes the method by using an example in which the network device performs the method. The method includes: The network device determines a plurality of target terminal devices that need to be paged. The network device sends a paging message to a first terminal device, where the first terminal device is any terminal device among the plurality of target terminal devices, and the paging message includes identification information of each of the plurality of target terminal devices and a synchronization sequence shared by the plurality of target terminal devices.

Based on the communication method provided in this embodiment of this application, when a network side simultaneously pages a plurality of terminal devices, identification information of the plurality of terminal devices may be combined in a same paging message, and a same synchronization sequence may be shared, thereby reducing a waste of resource overheads caused by repeated sending of the synchronization sequence, and reducing time-frequency resource overheads for transmitting the paging message.

According to a fourth aspect, a communication method is provided. The method may be performed by a first terminal device, or may be performed by a component (for example, a processor, a chip, or a chip system) of the first terminal device, or may be performed by an apparatus including the first terminal device. The following describes the method by using an example in which the first terminal device performs the method. The method includes: The first terminal device receives a paging message, where the first terminal device is any terminal device among a plurality of target terminal devices, and the paging message includes identification information of each of the plurality of target terminal devices and a synchronization sequence shared by the plurality of target terminal devices.

Based on the communication method provided in this embodiment of this application, when a network side simultaneously pages a plurality of terminal devices, identification information of the plurality of terminal devices may be combined in a same paging message, and a same synchronization sequence may be shared, thereby reducing a waste of resource overheads caused by repeated sending of the synchronization sequence, and reducing time-frequency resource overheads for transmitting the paging message.

With reference to the third aspect or the fourth aspect, in a possible design, the paging message includes second indication information, and the second indication information indicates a detection location corresponding to identification information of the first terminal device in the paging message.

In this solution, the second indication information may be used to indicate a detection location of identification information of a terminal device in the paging message, so that before the terminal device starts to detect the identification information, the terminal device is notified of a location from which the detection should start, thereby reducing detection complexity of the terminal device.

With reference to the third aspect or the fourth aspect, in a possible design, the second indication information indicates a length of identification information of one or more target terminal devices corresponding to each detection location in the paging message.

With reference to the third aspect or the fourth aspect, in a possible design, each detection location in the paging message corresponds to identification information of one of the plurality of target terminal devices; and that the second indication information indicates the length of the identification information of the one or more target terminal devices corresponding to each detection location in the paging message includes: The second indication information indicates, based on a ranking of the identification information of each target terminal device in the paging message, a length of the identification information of the one target terminal device corresponding to each detection location in the paging message.

With reference to the third aspect or the fourth aspect, in a possible design, each detection location in the paging message corresponds to identification information of one or more target terminal devices of a same length, and in identification information of the plurality of target terminal devices, identification information of target terminal devices of different lengths is arranged in a preset order in the paging message; and that the second indication information indicates the length of the identification information of the one or more target terminal devices corresponding to each detection location in the paging message includes: The second indication information indicates, according to the preset order, a quantity of pieces of identification information of target terminal devices of each length in the paging message.

According to a fifth aspect, a communication method is provided. The method may be performed by a network device, or may be performed by a component (for example, a processor, a chip, or a chip system) of the network device, or may be performed by an apparatus including the network device. The following describes the method by using an example in which the network device performs the method. The method includes: The network device receives a message 3 Msg3 from a terminal device, where the Msg3 includes paging mode switching request information and identification information of the terminal device, and the paging mode switching request information is used to request to switch from a low power wake-up receiver LP-WUS paging mode to a legacy paging mode. The network device determines, based on the identification information of the terminal device, that the terminal device is not a terminal device being paged by the network device. The network device sends a message 4 Msg4 to the terminal device, where the Msg4 includes first identification information and the identification information of the terminal device, and the first identification information is used to identify a success in switching to the legacy paging mode.

Based on the communication method provided in this embodiment of this application, original functions of the Msg3 and the Msg4 may be changed. The Msg3 and the Msg4 are no longer exchanged to perform random access and establish an RRC connection, but the Msg3 and the Msg4 are exchanged to switch a paging mode. There is no need to first establish an RRC connection and then exchange NAS signaling to switch the paging mode, thereby reducing signaling overheads.

With reference to the fifth aspect, in a possible design, the method further includes: The network device receives a random access preamble from the terminal device, where the random access preamble is used to request to switch to the legacy paging mode; and the network device sends a message 2 Msg2 to the terminal device, where the Msg2 is used to configure a resource for sending the Msg3.

According to a sixth aspect, a communication method is provided. The method may be performed by a terminal device, or may be performed by a component (for example, a processor, a chip, or a chip system) of the terminal device, or may be performed by an apparatus including the terminal device. The following describes the method by using an example in which the terminal device performs the method. The method includes: The terminal device sends a message 3 Msg3 to a network device, where the Msg3 includes paging mode switching request information and identification information of the terminal device, and the paging mode switching request information is used to request to switch from a low power wake-up receiver LP-WUS paging mode to a legacy paging mode. The terminal device receives a message 4 Msg4 from the network device, where the Msg4 includes first identification information and the identification information of the terminal device, and the first identification information is used to identify a success in switching to the legacy paging mode.

Based on the communication method provided in this embodiment of this application, original functions of the Msg3 and the Msg4 may be changed. The Msg3 and the Msg4 are no longer exchanged to perform random access and establish an RRC connection, but the Msg3 and the Msg4 are exchanged to switch a paging mode. There is no need to first establish an RRC connection and then exchange NAS signaling to switch the paging mode, thereby reducing signaling overheads.

With reference to the sixth aspect, in a possible design, the method further includes: The terminal device sends a random access preamble to the network device, where the random access preamble is used to request to switch to the legacy paging mode; and the terminal device receives a message 2 Msg2 from the network device, where the Msg2 is used to configure a resource for sending the Msg3.

According to a seventh aspect, a communication method is provided. The method may be performed by a network device, or may be performed by a component (for example, a processor, a chip, or a chip system) of the network device, or may be performed by an apparatus including the network device. The following describes the method by using an example in which the network device performs the method. The method includes: The network device determines that a quantity of terminal devices that actually need to monitor a paging message in a first monitoring window exceeds a maximum quantity allowed by the first monitoring window. The network device sends third indication information to a terminal device, where the third indication information indicates that a terminal device that does not detect a paging message in the first monitoring window is allowed to receive a paging message by using a target time-frequency resource, and the target time-frequency resource partially overlaps or does not overlap a time-frequency resource occupied by the first monitoring window.

Based on the communication method provided in this embodiment of this application, the network device may send the third indication information to the terminal device, so that a terminal device that does not perform monitoring in an original monitoring window may receive a paging message by using an additional target time-frequency resource without waiting for a next paging cycle, thereby reducing an access delay.

With reference to the seventh aspect, in a possible design, the method further includes: The network device sends fourth indication information to the terminal device, where the fourth indication information indicates the target time-frequency resource.

According to an eighth aspect, a communication method is provided. The method may be performed by a terminal device, or may be performed by a component (for example, a processor, a chip, or a chip system) of the terminal device, or may be performed by an apparatus including the terminal device. The following describes the method by using an example in which the terminal device performs the method. The method includes: The terminal device receives third indication information from a network device, where the third indication information indicates that a terminal device that does not detect a paging message in a first monitoring window is allowed to receive a paging message by using a target time-frequency resource, and the target time-frequency resource partially overlaps or does not overlap a time-frequency resource occupied by the first monitoring window.

Based on the communication method provided in this embodiment of this application, the network device may send the third indication information to the terminal device, so that a terminal device that does not perform monitoring in an original monitoring window may receive a paging message by using an additional target time-frequency resource without waiting for a next paging cycle, thereby reducing an access delay.

With reference to the eighth aspect, in a possible design, the method further includes: The terminal device receives fourth indication information from the network device, where the fourth indication information indicates the target time-frequency resource.

With reference to the seventh aspect or the eighth aspect, in a possible design, that the third indication information indicates that the terminal device that does not detect a paging message in the first monitoring window is allowed to receive a paging message by using the target time-frequency resource includes: The third indication information indicates that the quantity of terminal devices that need to monitor a paging message in the first monitoring window is greater than the maximum quantity allowed by the first monitoring window.

With reference to the seventh aspect or the eighth aspect, in a possible design, the third indication information indicates that a quantity of bits occupied by first control information sent in the first monitoring window meets a preset relationship, and that the quantity of bits occupied by the first control information meets the preset relationship represents that the first control information includes information indicating the target time-frequency resource.

With reference to the seventh aspect or the eighth aspect, in a possible design, the fourth indication information indicates index information corresponding to the target time-frequency resource in a preset time-frequency resource configuration table.

According to a ninth aspect, a communication apparatus is provided, configured to implement the method according to the first aspect. The communication apparatus may be the network device in the first aspect, an apparatus including the network device, or an apparatus included in the network device, for example, a chip.

The communication apparatus includes a corresponding module, unit, or means (means) for implementing the method. The module, unit, or means may be implemented by hardware, software, or hardware executing corresponding software. The hardware or the software includes one or more modules or units corresponding to the foregoing functions.

With reference to the ninth aspect, in a possible design, the communication apparatus includes a transceiver module and a processing module. The processing module is configured to determine a first condition that a terminal device supporting a low power wake-up receiver LP-WUS paging mode in a first cell needs to meet to perform the LP-WUS paging mode. The transceiver module is configured to send first indication information to the terminal device, where the first indication information indicates the first condition.

With reference to the ninth aspect, in a possible design, the processing module is specifically configured to determine the first condition based on a relationship between load of the first cell and a preset threshold.

According to a tenth aspect, a communication apparatus is provided, configured to implement the method according to the second aspect. The communication apparatus may be the terminal device in the second aspect, an apparatus including the terminal device, or an apparatus included in the terminal device, for example, a chip.

The communication apparatus includes a corresponding module, unit, or means (means) for implementing the method. The module, unit, or means may be implemented by hardware, software, or hardware executing corresponding software. The hardware or the software includes one or more modules or units corresponding to the foregoing functions.

With reference to the tenth aspect, in a possible design, the communication apparatus includes a transceiver module. The transceiver module is configured to receive first indication information, where the first indication information indicates a first condition that a terminal device supporting a low power wake-up receiver LP-WUS paging mode in a first cell needs to meet to perform the LP-WUS paging mode.

With reference to the ninth aspect or the tenth aspect, in a possible design, the first condition includes: supporting the LP-WUS paging mode.

With reference to the ninth aspect or the tenth aspect, in a possible design, the first condition includes: An identification number of the terminal device meets a preset relationship.

With reference to the ninth aspect or the tenth aspect, in a possible design, the first condition includes: The terminal device has an energy saving requirement.

According to an eleventh aspect, a communication apparatus is provided, configured to implement the method according to the third aspect. The communication apparatus may be the network device in the third aspect, an apparatus including the network device, or an apparatus included in the network device, for example, a chip.

The communication apparatus includes a corresponding module, unit, or means (means) for implementing the method. The module, unit, or means may be implemented by hardware, software, or hardware executing corresponding software. The hardware or the software includes one or more modules or units corresponding to the foregoing functions.

With reference to the eleventh aspect, in a possible design, the communication apparatus includes a transceiver module and a processing module. The processing module is configured to determine a plurality of target terminal devices that need to be paged. The transceiver module is configured to send a paging message to a first terminal device, where the first terminal device is any terminal device among the plurality of target terminal devices, and the paging message includes identification information of each of the plurality of target terminal devices and a synchronization sequence shared by the plurality of target terminal devices.

According to a twelfth aspect, a communication apparatus is provided, configured to implement the method according to the fourth aspect. The communication apparatus may be the terminal device in the fourth aspect, an apparatus including the terminal device, or an apparatus included in the terminal device, for example, a chip.

The communication apparatus includes a corresponding module, unit, or means (means) for implementing the method. The module, unit, or means may be implemented by hardware, software, or hardware executing corresponding software. The hardware or the software includes one or more modules or units corresponding to the foregoing functions.

With reference to the twelfth aspect, in a possible design, the communication apparatus includes a transceiver module. The transceiver module is configured to receive a paging message, where the paging message includes identification information of each of a plurality of target terminal devices and a synchronization sequence shared by the plurality of target terminal devices.

With reference to the eleventh aspect or the twelfth aspect, in a possible design, the paging message includes second indication information, and the second indication information indicates a detection location corresponding to identification information of the first terminal device in the paging message.

With reference to the eleventh aspect or the twelfth aspect, in a possible design, the second indication information indicates a length of identification information of one or more target terminal devices corresponding to each detection location in the paging message.

With reference to the eleventh aspect or the twelfth aspect, in a possible design, each detection location in the paging message corresponds to identification information of one of the plurality of target terminal devices; and that the second indication information indicates the length of the identification information of the one or more target terminal devices corresponding to each detection location in the paging message includes: The second indication information indicates, based on a ranking of the identification information of each target terminal device in the paging message, a length of the identification information of the one target terminal device corresponding to each detection location in the paging message.

With reference to the eleventh aspect or the twelfth aspect, in a possible design, each detection location in the paging message corresponds to identification information of one or more target terminal devices of a same length, and in identification information of the plurality of target terminal devices, identification information of target terminal devices of different lengths is arranged in a preset order in the paging message; and that the second indication information indicates the length of the identification information of the one or more target terminal devices corresponding to each detection location in the paging message includes: The second indication information indicates, according to the preset order, a quantity of pieces of identification information of target terminal devices of each length in the paging message.

According to a thirteenth aspect, a communication apparatus is provided, configured to implement the method according to the fifth aspect. The communication apparatus may be the network device in the fifth aspect, an apparatus including the network device, or an apparatus included in the network device, for example, a chip.

The communication apparatus includes a corresponding module, unit, or means (means) for implementing the method. The module, unit, or means may be implemented by hardware, software, or hardware executing corresponding software. The hardware or the software includes one or more modules or units corresponding to the foregoing functions.

With reference to the thirteenth aspect, in a possible design, the communication apparatus includes a transceiver module and a processing module. The transceiver module is configured to receive a message 3 Msg3 from a terminal device, where the Msg3 includes paging mode switching request information and identification information of the terminal device, and the paging mode switching request information is used to request to switch from a low power wake-up receiver LP-WUS paging mode to a legacy paging mode. The processing module is configured to determine, based on the identification information of the terminal device, that the terminal device is not a terminal device being paged by the network device. The transceiver module is further configured to send a message 4 Msg4 to the terminal device, where the Msg4 includes first identification information and the identification information of the terminal device, and the first identification information is used to identify a success in switching to the legacy paging mode.

With reference to the thirteenth aspect, in a possible design, the transceiver module is further configured to receive a random access preamble from the terminal device, where the random access preamble is used to request to switch to the legacy paging mode. The transceiver module is further configured to send a message 2 Msg2 to the terminal device, where the Msg2 is used to configure a resource for sending the Msg3.

According to a fourteenth aspect, a communication apparatus is provided, configured to implement the method according to the sixth aspect. The communication apparatus may be the terminal device in the sixth aspect, an apparatus including the terminal device, or an apparatus included in the terminal device, for example, a chip.

The communication apparatus includes a corresponding module, unit, or means (means) for implementing the method. The module, unit, or means may be implemented by hardware, software, or hardware executing corresponding software. The hardware or the software includes one or more modules or units corresponding to the foregoing functions.

With reference to the fourteenth aspect, in a possible design, the communication apparatus includes a transceiver module. The transceiver module is configured to send a message 3 Msg3 to a network device, where the Msg3 includes paging mode switching request information and identification information of the terminal device, and the paging mode switching request information is used to request to switch from a low power wake-up receiver LP-WUS paging mode to a legacy paging mode. The transceiver module is further configured to receive a message 4 Msg4 from the network device, where the Msg4 includes first identification information and the identification information of the terminal device, and the first identification information is used to identify a success in switching to the legacy paging mode.

With reference to the fourteenth aspect, in a possible design, the transceiver module is further configured to send a random access preamble to the network device, where the random access preamble is used to request to switch to the legacy paging mode. The transceiver module is further configured to receive a message 2 Msg2 from the network device, where the Msg2 is used to configure a resource for sending the Msg3.

According to a fifteenth aspect, a communication apparatus is provided, configured to implement the method according to the seventh aspect. The communication apparatus may be the network device in the seventh aspect, an apparatus including the network device, or an apparatus included in the network device, for example, a chip.

The communication apparatus includes a corresponding module, unit, or means (means) for implementing the method. The module, unit, or means may be implemented by hardware, software, or hardware executing corresponding software. The hardware or the software includes one or more modules or units corresponding to the foregoing functions.

With reference to the fifteenth aspect, in a possible design, the communication apparatus includes a transceiver module and a processing module. The processing module is configured to determine that a quantity of terminal devices that actually need to monitor a paging message in a first monitoring window exceeds a maximum quantity allowed by the first monitoring window. The transceiver module is configured to send third indication information to a terminal device, where the third indication information indicates that a terminal device that does not detect a paging message in the first monitoring window is allowed to receive a paging message by using a target time-frequency resource, and the target time-frequency resource partially overlaps or does not overlap a time-frequency resource occupied by the first monitoring window.

With reference to the fifteenth aspect, in a possible design, the transceiver module is further configured to send fourth indication information to the terminal device, where the fourth indication information indicates the target time-frequency resource.

According to a sixteenth aspect, a communication apparatus is provided, configured to implement the method according to the eighth aspect. The communication apparatus may be the terminal device in the eighth aspect, an apparatus including the terminal device, or an apparatus included in the terminal device, for example, a chip.

The communication apparatus includes a corresponding module, unit, or means (means) for implementing the method. The module, unit, or means may be implemented by hardware, software, or hardware executing corresponding software. The hardware or the software includes one or more modules or units corresponding to the foregoing functions.

With reference to the sixteenth aspect, in a possible design, the communication apparatus includes a transceiver module. The transceiver module is configured to receive third indication information from a network device, where the third indication information indicates that a terminal device that does not detect a paging message in a first monitoring window is allowed to receive a paging message by using a target time-frequency resource, and the target time-frequency resource partially overlaps or does not overlap a time-frequency resource occupied by the first monitoring window.

With reference to the sixteenth aspect, in a possible design, the transceiver module is further configured to receive fourth indication information from the network device, where the fourth indication information indicates the target time-frequency resource.

With reference to the fifteenth aspect or the sixteenth aspect, in a possible design, that the third indication information indicates that the terminal device that does not detect a paging message in the first monitoring window is allowed to receive a paging message by using the target time-frequency resource includes: The third indication information indicates that the quantity of terminal devices that need to monitor a paging message in the first monitoring window is greater than the maximum quantity allowed by the first monitoring window.

With reference to the fifteenth aspect or the sixteenth aspect, in a possible design, the third indication information indicates that a quantity of bits occupied by first control information sent in the first monitoring window meets a preset relationship, and that the quantity of bits occupied by the first control information meets the preset relationship represents that the first control information includes information indicating the target time-frequency resource.

With reference to the fifteenth aspect or the sixteenth aspect, in a possible design, the fourth indication information indicates index information corresponding to the target time-frequency resource in a preset time-frequency resource configuration table.

According to a seventeenth aspect, a communication apparatus is provided, including a processor. The processor is configured to execute instructions stored in a memory, and when the processor executes the instructions, the communication apparatus is enabled to perform the method according to any one of the foregoing aspects. The communication apparatus may be the network device or the terminal device in the first aspect to the sixteenth aspect.

In a possible design, the communication apparatus further includes the memory, and the memory is configured to store computer instructions. Optionally, the processor and the memory are integrated together, or the processor and the memory are separately disposed.

In a possible design, the memory is coupled to the processor, and is outside the communication apparatus.

According to an eighteenth aspect, a communication apparatus is provided, including a processor and an interface circuit. The interface circuit is configured to communicate with a module outside the communication apparatus. The processor is configured to perform the method according to any one of the foregoing aspects by using a logic circuit or by running a computer program or instructions. The communication apparatus may be the network device or the terminal device in the first aspect to the sixteenth aspect.

Alternatively, the interface circuit may be a code/data read/write interface circuit, and the interface circuit is configured to receive computer-executable instructions (the computer-executable instructions are stored in a memory, and may be read from the memory directly or through another component) and transmit the computer-executable instructions to the processor, so that the processor runs the computer-executable instructions to perform the method in any one of the foregoing aspects.

In some possible designs, the communication apparatus may be a chip or a chip system.

According to a nineteenth aspect, this application provides a computer-readable storage medium. The computer-readable storage medium stores instructions, and when the instructions are run, the communication method performed by the terminal device or the network device in the possible designs of any one of the foregoing aspects is performed.

According to a twentieth aspect, this application provides a computer program product including instructions. When the computer program product runs on a computer, the computer is enabled to perform the communication method performed by the terminal device or the network device in the possible designs of any one of the foregoing aspects.

According to a twenty-first aspect, a communication apparatus (for example, the communication apparatus may be a chip or a chip system) is provided. The communication apparatus includes a processor, configured to implement a function in any one of the foregoing aspects. In a possible design, the communication apparatus further includes a memory, and the memory is configured to store necessary program instructions and data. When being a chip system, the communication apparatus may include a chip, or may include a chip and another discrete component.

According to a twenty-second aspect, a communication system is provided. The communication system includes a terminal device and a network device. The network device is configured to implement the methods according to the first aspect, the third aspect, the fifth aspect, and the seventh aspect, and the terminal device is configured to implement the methods according to the second aspect, the fourth aspect, the sixth aspect, and the eighth aspect.

For technical effects brought by any design in the ninth aspect to the twenty-second aspect, refer to the technical effects brought by different designs in the first aspect to the eighth aspect. Details are not described herein again.

### BRIEF DESCRIPTION OF DRAWINGS

FIG. 1 is a diagram of a terminal device in an LP-WUR paging mode;
FIG. 2 is a diagram of a structure of one frame of paging message;
FIG. 3 is a diagram of a plurality of paging messages;
FIG. 4 is a diagram in which a plurality of terminal devices monitor a paging message in a same monitoring window;
FIG. 5 is a diagram of a structure of a communication system according to an embodiment of this application;
FIG. 6 is a diagram of structures of a terminal device and a network device according to an embodiment of this application;
FIG. 7 is a diagram of a structure of another terminal device according to an embodiment of this application;
FIG. 8 is a diagram of interaction of a communication method according to an embodiment of this application;
FIG. 9 is a diagram of interaction of another communication method according to an embodiment of this application;
FIG. 10 is a diagram of a paging message according to an embodiment of this application;
FIG. 11 is a diagram 1 of indicating a UE ID by second indication information according to an embodiment of this application;
FIG. 12 is a diagram 2 of indicating a UE ID by second indication information according to an embodiment of this application;
FIG. 13 is a diagram 3 of indicating a UE ID by second indication information according to an embodiment of this application;
FIG. 14 is a diagram 4 of indicating a UE ID by second indication information according to an embodiment of this application;
FIG. 15 is a diagram 5 of indicating a UE ID by second indication information according to an embodiment of this application;
FIG. 16 is a diagram of interaction of another communication method according to an embodiment of this application;
FIG. 17 is a diagram of interaction of another communication method according to an embodiment of this application;
FIG. 18 is a diagram of a structure of a communication apparatus according to an embodiment of this application; and
FIG. 19 is a diagram of a structure of another communication apparatus according to an embodiment of this application.

### DESCRIPTION OF EMBODIMENTS

For ease of understanding of technical solutions in embodiments of this application, the following first briefly describes technologies related to this application.

### 1. Paging:

Paging is a process initiated by a network side to search for a terminal device. A trigger condition of paging is that the network side needs to send signaling or data to the terminal device, but the terminal device is not in a connected (connected) state. In this case, the network side cannot directly send the signaling or data to the terminal device, and the network side does not know a specific location of the terminal device. To find the terminal device, the network side needs to perform paging.

To page the terminal device, the network side delivers a group of paging messages within a paging cycle (paging cycle). One paging cycle includes N paging frames (paging frame, PF), and one paging frame includes one or more paging subframes (paging occasion, PO). For a terminal device, the terminal device attempts to receive a paging message only in a specific PO of a specific PF within a paging cycle. In other words, for a terminal device, only one PO may be used to receive a paging message within each paging cycle.

Currently, for a terminal device, a system frame number (system frame number, SFN) of a PF used by the terminal device to receive a paging message and an index (index) of a PO used to receive the paging message in the PF are related to a system identification number (user equipment identity document, UE ID) of the terminal device. The terminal device may substitute a related configuration parameter in a system message broadcast by the network side and the UE ID of the terminal device into a preset formula for calculation, to determine a specific PO of a specific PF within a paging cycle for receiving a paging message.

One PO includes a plurality of physical downlink control channel (physical downlink control channel, PDCCH) monitoring windows (monitoring occasion). The terminal device may continuously monitor a paging message starting from a start monitoring window of the terminal device until the terminal device receives a paging message sent to the terminal device. In this case, the terminal device does not need to continue detection in a subsequent monitoring window. An index of the start monitoring window of the terminal device in the PO is also related to the UE ID of the terminal device.

In conclusion, the terminal device may determine, based on the UE ID of the terminal device, a time-frequency resource used to monitor a paging message.

### 2. LP-WUR paging mode:

In a legacy paging mode (legacy paging mode), a main receiver of a terminal device directly receives a group of paging messages delivered by a network side, and determines whether the paging messages are sent to the terminal device. However, in the legacy paging mode, the main receiver needs to keep in a woken-up state, and power consumption is relatively high. To save energy, the LP-WUR paging mode is proposed.

In the LP-WUR paging mode, a group of paging messages delivered by a network side may be received by a low power receiver, that is, an LP-WUR, of a terminal device. When the LP-WUR receives a paging message sent to the terminal device, the terminal device wakes up a main receiver to perform a subsequent operation, such as random access and a system message change. Because power consumption of the LP-WUR is much lower than power consumption of a legacy main receiver, power consumption of the terminal device can be reduced in a manner of receiving a paging message by using the LP-WUR and then waking up the main receiver.

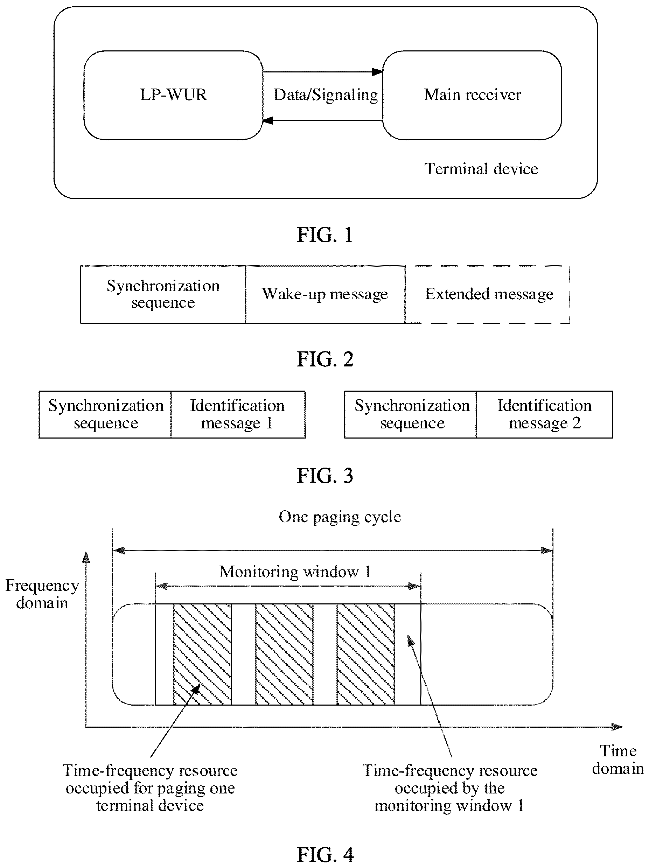

For example, FIG. 1 is a diagram of a relationship between an LP-WUR and a main receiver of a terminal device in an LP- WUR paging mode. As shown in FIG. 1, data or signaling may be exchanged between the LP-WUR and the main receiver.

Currently, in the LP-WUR paging mode, a modulation scheme used for a paging message may be a binary on-off keying (on-off keying, OOK) modulation scheme or a frequency-shift keying (frequency-shift keying, FSK) modulation scheme. These modulation schemes have a simple demodulation process and are friendly to power consumption of the LP-WUR. However, the foregoing modulation schemes have low spectrum utilization, and an entire orthogonal frequency division multiplexing (orthogonal frequency division multiplexing, OFDM) symbol usually can carry information of only several bits (bit). Therefore, if the network side pages a plurality of terminal devices in the LP-WUR paging mode, a large quantity of time-frequency resources are occupied.

FIG. 2 is a diagram of a frame of paging message sent by a network side in an LP-WUR paging mode. The following describes information included in the paging message with reference to FIG. 2.

A first part is a synchronization sequence, including a preamble (preamble) used for synchronization, and is mainly used to improve demodulation accuracy of a subsequent message.

A second part is a wake-up message (wake-up message), including identification information of a terminal device that is pre-agreed by the network side and the terminal device, so that the terminal device knows whether the frame of paging message is used to page the terminal device. Optionally, the identification information included in the wake-up message may be terminal device-specific (UE-specific), that is, the terminal device is in one-to-one correspondence with the identification information, and different terminal devices correspond to different identification information. Alternatively, the identification information included in the wake-up message may be group-specific (group-specific), that is, a group of terminal devices share same identification information. After receiving a paging message including corresponding identification information, any terminal device in a same group may be woken up.

Optionally, a third part is an extended message (extended message), and is mainly used to carry some operation indications for a woken-up main receiver, for example, a system message change indication.

### 3. Random access:

A terminal device may complete uplink synchronization through random access (random access, RA), and switch from an idle (idle) state to a connected state. This is an important part in communication. A random access procedure may be triggered by a plurality of events. A terminal device in an idle state may access a cell and establish an RRC connection to a network side through a random access procedure, to switch to a connected state.

The random access procedure may be classified into a contention-based random access (contention-based RA) procedure and a contention-free random access (contention-free RA) procedure. The contention-based random access procedure is a procedure in which a network device does not allocate a dedicated random access preamble (preamble) and/or a dedicated physical random access channel (physical random access channel, PRACH) resource to a terminal device, but the terminal device randomly selects a preamble within a specified range and initiates random access. The contention-free random access procedure means that a terminal device initiates, based on an indication of a network device, random access on a specified PRACH resource by using a specified preamble.

Usually, a terminal device in an idle state always accesses a cell in the contention-based random access manner. This is because there is no RRC connection between a network device and the terminal device in this case, and the terminal device can obtain RACH and PRACH configurations only from a system message (system information) broadcast by the network device. A RACH/PRACH resource in the system message is shared by users in the cell. Therefore, the terminal device can attempt to access the cell only in the contention-based random access manner.

Further, based on the contention-based/contention-free classification manner, according to different steps of exchanging information, random access may be classified into 4-step random access (4-step random access channel, 4-step RACH) and 2-step random access (2-step random access channel, 2-step RACH). In comparison with the 4-step random access, in the 2-step random access, information exchange steps are combined, which reduces steps and time required for a random access procedure compared with those in the 4-step random access.

The following describes a contention-based 4-step random access type (CBRA with 4-step RA type), which includes the following four steps.

Step 1: A terminal device sends a random access preamble, which is also referred to as sending a message 1 (message 1, Msg1), to a network device on a PRACH resource.

Step 2: After receiving the Msg1 sent by the terminal device, the network device sends a message 2 (message 2, Msg2) to the terminal device based on the random access preamble sent by the terminal device, where the Msg2 is also referred to as a random access response (random access response, RAR) message, and is a response of the network device to the received Msg1. The Msg2 includes configuration information such as a time-frequency resource location and a modulation and coding scheme to be used by the terminal device to send a Msg3.

Step 3: After receiving the Msg2, the terminal device sends the message 3 (message 3, Msg3) to the network device on a corresponding time-frequency resource based on the configuration information in the Msg2. The Msg3 is used for contention resolution. If a plurality of different terminal devices use a same random access preamble to perform random access, whether a conflict exists may be determined by using both the Msg3 and a Msg4.

Transmission content of the Msg3 is a higher layer message, and the content thereof is not fixed. For example, if current random access is initiated by a terminal device in an idle state to access a cell, the Msg3 may be a radio resource control (Radio Resource Control, RRC) connection setup request (RRC setup request) message, to request to set up an RRC connection to the network device. Currently, in a protocol, the Msg3 is defined as a part of a random access procedure, and is transmitted on an uplink shared channel (uplink shared channel, UL-SCH). The Msg3 includes a cell radio network temporary identifier (cell radio network temporary identifier, C-RNTI), a media access control (media access control, MAC) control element (control element, CE), or a common control channel (common control channel, CCCH) service data unit (service data unit, SDU). Such information is associated with a contention resolution identity of the terminal device, and may be understood as identification information of the terminal device used for contention resolution.

Step 4: After receiving the Msg3, the network device returns the message 4 (message 4, Msg4) to the terminal device. Information content included in the Msg4 is not fixed, and needs to be corresponding to the information content included in the Msg3, to be jointly used for contention resolution. For example, it is assumed that the Msg3 sent by the terminal device includes the C-RNTI. Correspondingly, if the terminal device detects, in the Msg4, the C-RNTI sent by the terminal device in the Msg3, it is considered that random access succeeds, and a subsequent communication process continues. Otherwise, it is considered that random access fails, and the terminal device re-initiates a random access procedure.

Optionally, if a Msg3 sent by a terminal device is an RRC connection setup request message, a Msg4 may be understood as a response message of the RRC connection setup request. For the terminal device, if the received Msg4 includes identification information sent by the terminal device in the Msg3, it indicates that RRC connection setup (RRC setup) succeeds; otherwise, RRC connection fails.

The LP-WUR paging mode and the random access procedure are briefly described above. However, the current LP-WUR paging mode has the following problems.
1. Currently, a manner in which a network device configures whether a terminal device supporting the LP-WUS paging mode uses the LP-WUS paging mode is: notifying, by using a broadcast system information block 1 (system information block 1, SIB1), the terminal device whether a current cell supports the LP-WUS paging mode. That is, all terminal devices supporting the LP-WUS paging mode in the cell use the LP- WUS paging mode, or none of the terminal devices uses the LP-WUS paging mode.
   However, a terminal device side and a network side have different requirements for the LP-WUS paging mode. The LP-WUS paging mode is beneficial to energy saving of the terminal device, but spectrum utilization is low, that is, utilization of a time-frequency resource on the network side is low. Therefore, to meet an energy saving requirement, the terminal device supporting the LP-WUS paging mode expects that the network side pages the terminal device in the LP-WUS mode. When load of the network side is high, from a perspective of saving time-frequency resources, the network side usually does not want to perform paging in the LP-WUS mode. However, in the current configuration manner, all the terminal devices supporting the LP-WUS paging mode in the cell use the LP-WUS paging mode, causing great pressure to cell load on the network side; or none of the terminal devices uses the LP-WUS paging mode, and an energy saving requirement of the terminal device cannot be met. It can be learned that in the current configuration manner, a balance between a time-frequency resource saving requirement on the network side and an energy saving requirement on the terminal device side cannot be achieved.
2. Based on a frame structure of a paging message in the current LP-WUS paging mode, when a network side needs to continuously page a plurality of terminal devices, a network device needs to separately send a plurality of different paging messages. An example expression form is shown in FIG. 3. Each paging message includes a synchronization sequence and subsequent identification information of a terminal device. In other words, each time the network side pages a terminal device, a synchronization sequence needs to be sent. If synchronization sequences in different paging messages are the same, when the network side needs to page a plurality of terminal devices, a relatively large quantity of resources need to be allocated to repeatedly send a plurality of same synchronization sequences, causing a waste of resources.
3. In some scenarios, for example, when signal quality of the LP-WUS paging mode is poor, or a terminal device does not have a high requirement for low power consumption, the terminal device expects to switch from the LP-WUS paging mode to a legacy paging mode, and the terminal device needs to notify a network side to page the terminal device in the legacy paging mode. In this case, the terminal device needs to communicate identification information of the terminal device and exchange information about paging mode switching with the network side. Currently, the foregoing manner of switching a paging mode is to perform interaction by using non-access stratum (non-access stratum, NAS) signaling. Exchanging NAS signaling requires that the terminal device and the network side establish an RRC connection. It can be learned from the foregoing description of the random access procedure that a large amount of signaling needs to be transmitted in a process in which a terminal device in an idle state initiates random access to establish an RRC connection, causing a waste of resources.
4. Based on a method for determining a monitoring window used to monitor a paging message, monitoring windows determined by a plurality of terminal devices may be the same. In other words, a plurality of terminal devices may monitor a paging message within a same monitoring window. Consequently, a time-frequency resource in the monitoring window may fail to meet a requirement for paging the plurality of terminal devices. In this case, some terminal devices that do not detect a paging message need to wait for a next paging cycle to re-monitor whether the terminal devices are paged, thereby increasing an access delay of the terminal devices. For example, as shown in FIG. 4, a maximum of three terminal devices can be paged on a time-frequency resource in a monitoring window 1. If a quantity of terminal devices that need to be paged within the monitoring window 1 during paging exceeds 3, an excess terminal device needs to wait for a monitoring window 1 of a next paging cycle to perform monitoring again.

Embodiments of this application provide a communication method, apparatus, and system, to resolve the foregoing problems in an LP-WUS paging mode. The following describes technical solutions in embodiments of this application with reference to the accompanying drawings in embodiments of this application. In the descriptions of this application, unless otherwise specified, "/" represents an "or" relationship between associated objects. For example, A/B may represent A or B. "And/or" in this application describes only an association relationship of associated objects and represents that three relationships may exist. For example, A and/or B may represent the following three cases: Only A exists, both A and B exist, and only B exists. A and B may be singular or plural. In addition, in the descriptions of this application, unless otherwise specified, "a plurality of" means two or more. "At least one of the following items (pieces)" or a similar expression thereof means any combination of these items, including a single item (piece) or any combination of a plurality of items (pieces). For example, at least one of a, b, or c may represent a, b, c, a and b, a and c, b and c, or a, b, and c, where a, b, and c may be singular or plural. In addition, for ease of clearly describing the technical solutions in embodiments of this application, the words such as "first" and "second" are used to distinguish between same or similar items whose functions are basically the same in embodiments of this application. A person skilled in the art may understand that the words such as "first" and "second" do not limit a quantity or an execution order, and the words such as "first" and "second" do not necessarily indicate a specific difference. In addition, in embodiments of this application, words such as "example" or "for example" are used to represent giving examples, illustrations, or descriptions. Any embodiment or design solution described as "example" or "for example" in embodiments of this application should not be construed as being more preferred or advantageous than other embodiments or design solutions. Specifically, the words such as "example" or "for example" are used to present a related concept in a specific manner for ease of understanding.

The technical solutions in embodiments of this application may be applied to various communication systems. The communication system may be a 3rd generation partnership project (3rd generation partnership project, 3GPP) communication system, for example, a long term evolution (long term evolution, LTE) system, a 5th generation mobile communication technology (5th generation mobile communication technology, 5G) system, an internet of things (internet of things, IoT) system, a non-terrestrial network (non-terrestrial network, NTN) system, or a vehicle-to-everything (vehicle-to-everything, V2X) system; or a device-to-device (device-to-device, D2D) communication system, a machine-to-machine (machine-to-machine, M2M) communication system, or another future-oriented similar new system, for example, a 6th generation (sixth-generation, 6G) system. This is not specifically limited in embodiments of this application. In addition, the terms "system" and "network" may be interchanged.

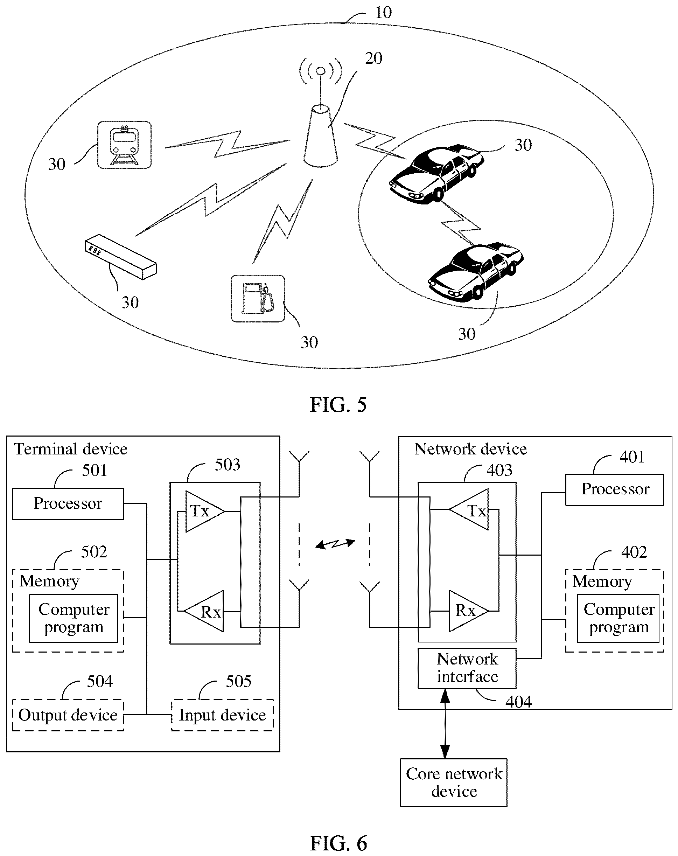

FIG. 5 shows a communication system 10 according to an embodiment of this application. The communication system 10 includes a network device 20 and one or more terminal devices 30. The terminal device 30 may communicate with the network device 20 in a wireless manner. Optionally, different terminal devices 30 may communicate with each other. The terminal device 30 may be at a fixed location, or may be mobile.

It should be noted that FIG. 5 is merely a diagram. Although not shown, another network device may further be included in the communication system 10. For example, the communication system 10 may further include one or more of a core network device, a wireless relay device, and a wireless backhaul device. This is not specifically limited herein. The network device may be connected to the core network device in a wireless or wired manner. The core network device and the network device 20 may be different independent physical devices, or functions of the core network device and logical functions of the network device 20 may be integrated into a same physical device, or some functions of the core network device and some functions of the network device 20 may be integrated into one physical device. This is not specifically limited in embodiments of this application.

For example, the network device 20 shown in FIG. 5 interacts with any terminal device 30. In a communication method provided in embodiments of this application, the network device 20 determines a first condition that a terminal device supporting an LP-WUS paging mode in a first cell needs to meet to perform the LP-WUS paging mode. The network device 20 sends first indication information to the terminal device 30, where the first indication information indicates the first condition. Specific implementations and technical effects of the solution are described in detail in subsequent method embodiments, and details are not described herein.

For example, the network device 20 shown in FIG. 5 interacts with any terminal device 30. In another communication method provided in embodiments of this application, the network device 20 determines a plurality of target terminal devices that need to be paged. Then, the network device sends a paging message to a first terminal device 30, where the first terminal device 30 is any terminal device among the plurality of target terminal devices, and the paging message includes identification information of each of the plurality of target terminal devices and a synchronization sequence shared by the plurality of target terminal devices. Specific implementations and technical effects of the solution are described in detail in subsequent method embodiments, and details are not described herein.

For example, the network device 20 shown in FIG. 5 interacts with any terminal device 30. In another communication method provided in embodiments of this application, the network device 20 receives a Msg3 from the terminal device 30, where the Msg3 includes paging mode switching request information and identification information of the terminal device 30, and the paging mode switching request information is used to request to switch from an LP-WUS paging mode to a legacy paging mode. The network device 20 determines, based on the identification information of the terminal device 30, that the terminal device 30 is not a terminal device being paged by the network device. Further, the network device 20 sends a Msg4 to the terminal device 30, where the Msg4 includes first identification information and the identification information of the terminal device, and the first identification information is used to identify a success in switching to the legacy paging mode. Specific implementations and technical effects of the solution are described in detail in subsequent method embodiments, and details are not described herein.

For example, the network device 20 shown in FIG. 5 interacts with any terminal device 30. In another communication method provided in embodiments of this application, the network device 20 determines that a quantity of terminal devices that need to monitor a paging message in a first monitoring window exceeds a maximum quantity allowed by the first monitoring window. Further, the network device 20 sends third indication information to the terminal device 30, where the third indication information indicates that a terminal device that does not detect a paging message in the first monitoring window is allowed to receive a paging message by using a target time-frequency resource, and the target time-frequency resource partially overlaps or does not overlap a time-frequency resource occupied by the first monitoring window. Specific implementations and technical effects of the solution are described in detail in subsequent method embodiments, and details are not described herein.

Optionally, the network device in embodiments of this application is a device that accesses a terminal device to a wireless network. The network device in embodiments of this application may include base stations (base station) in various forms, for example, may be a macro base station, a micro base station (also referred to as a small cell), a relay station, an access point, a transmitting point (transmitting point, TP), an evolved NodeB (evolved NodeB, eNodeB), a transmission reception point (transmission reception point, TRP), a next generation NodeB (next generation NodeB, gNB) in a 5G mobile communication system, a device that implements a base station function in a communication system evolved after 5G, a mobile switching center, or a device that performs a base station function in device-to-device (Device-to-Device, D2D), vehicle-to-everything (vehicle-to-everything, V2X), or machine-to-machine (machine-to-machine, M2M) communication; may be a network device in an NTN communication system, that is, may be deployed on a high-altitude platform or a satellite; or may be a module or a unit that completes some functions of a base station, for example, may be a central unit (central unit, CU) or a distributed unit (distributed unit, DU) in a cloud radio access network (cloud radio access network, C-RAN) system. Neither of a specific technology and a specific device form used by the network device is limited in embodiments of this application. All or some functions of the network device may alternatively be implemented by using a software function running on hardware, or may be implemented by using an instantiated virtualization function on a platform (for example, a cloud platform). In this application, unless otherwise specified, the network device is a radio access network device.

Optionally, the terminal device in embodiments of this application may be a device having wireless receiving and sending functions, or may be referred to as a terminal (terminal). The terminal device may be specifically user equipment, an access terminal, a subscriber unit (subscriber unit), a subscriber station, a mobile station (mobile station), customer-premises equipment (customer-premises equipment, CPE), a remote station, a remote terminal, a mobile device, a mobile terminal, a user terminal, a wireless communication device, a user agent, a user apparatus, or the like. The terminal device may alternatively be a satellite phone, a cellular phone, a smartphone, a cordless phone, a session initiation protocol (session initiation protocol, SIP) phone, a wireless data card, a wireless modem, a tablet computer, a computer with wireless receiving and sending functions, a wireless local loop (wireless local loop, WLL) station, a personal digital assistant (personal digital assistant, PDA), a handheld device with a wireless communication function, a computing device or another processing device connected to a wireless modem, a vehicle-mounted device, a communication device on a high-altitude aircraft, a wearable device, an uncrewed aerial vehicle, a robot, an intelligent point of sale (point of sale, POS) machine, a machine type communication device, a terminal device in D2D, a terminal device in V2X, a terminal device in virtual reality (virtual reality, VR), a terminal device in augmented reality (augmented reality, AR), a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a terminal device in a future communication network, or the like. Neither of a specific technology and a specific device form used by the terminal device is limited in embodiments of this application. All or some functions of the terminal device may alternatively be implemented by using a software function running on hardware, or may be implemented by using an instantiated virtualization function on a platform (for example, a cloud platform).

Optionally, in embodiments of this application, the network device and the terminal device may be deployed on land, including an indoor device, an outdoor device, a handheld device, or a vehicle-mounted device; may be deployed on a water surface; or may be deployed on an airplane, a balloon, and an artificial satellite in the air. Application scenarios of the network device and the terminal device are not limited in embodiments of this application.

Optionally, the network device and the terminal device in embodiments of this application may communicate with each other through a licensed spectrum, may communicate with each other through an unlicensed spectrum, or may communicate with each other through both a licensed spectrum and an unlicensed spectrum. The network device and the terminal device may communicate with each other by using a spectrum below 6 gigahertz (gigahertz, GHz), or may communicate with each other by using a spectrum above 6 GHz, or may communicate with each other by using both a spectrum below 6 GHz and a spectrum above 6 GHz. A spectrum resource used between the network device and the terminal device is not limited in embodiments of this application.

Optionally, the network device and the terminal device in embodiments of this application each may also be referred to as a communications apparatus, and may be a general-purpose device or a dedicated device. This is not specifically limited in embodiments of this application.

Optionally, FIG. 6 is a diagram of structures of a network device and a terminal device according to an embodiment of this application. The terminal device 30 in FIG. 5 may use a structure of the terminal device shown in FIG. 6, and the network device 20 in FIG. 5 may use a structure of the network device shown in FIG. 6.

The terminal device includes at least one processor 501 and at least one transceiver 503. Optionally, the terminal device may further include at least one memory 502, at least one output device 504, or at least one input device 505.

The processor 501, the memory 502, and the transceiver 503 are connected through a communication line. The communication line may include a path for transmitting information between the foregoing components.

The processor 501 may be a general-purpose central processing unit (central processing unit, CPU), another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor or the like. During specific implementation, in an embodiment, the processor 501 may alternatively include a plurality of CPUs, and the processor 501 may be a single-core processor or a multi-core processor. The processor herein may be one or more devices, circuits, or processing cores configured to process data.

The memory 502 may be an apparatus having a storage function. For example, the memory may be a read-only memory (read-only memory, ROM) or another type of static storage device that can store static information and instructions, or a random access memory (random access memory, RAM) or another type of dynamic storage device that can store information and instructions, or may be a programmable read-only memory (programmable ROM, PROM), an erasable programmable read-only memory (erasable PROM, EPROM), an electrically erasable programmable read-only memory (electrically erasable programmable read-only memory, EEPROM), a compact disc read-only memory (compact disc read-only memory, CD-ROM) or another compact disk storage, an optical disk storage (including a compact disc, a laser disc, an optical disc, a digital versatile disc, a Blu-ray disc, or the like), a magnetic disk storage medium or another magnetic storage device, or any other medium that can be used to carry or store expected program code in a form of instructions or a data structure and that can be accessed by a computer. However, this is not limited. The memory 502 may exist independently and is connected to the processor 501 by using the communication line. The memory 502 may alternatively be integrated with the processor 501.

The memory 502 is configured to store computer-executable instructions for performing the solutions in this application, and the processor 501 controls execution. Specifically, the processor 501 is configured to execute the computer-executable instructions stored in the memory 502, to implement the communication method in embodiments of this application.

Alternatively, optionally, in embodiments of this application, the processor 501 may perform a processing-related function in a communication method provided in the following embodiments of this application, and the transceiver 503 is responsible for communicating with another device or a communication network. This is not specifically limited in embodiments of this application.

Optionally, the computer-executable instructions in embodiments of this application may also be referred to as application program code or computer program code. This is not specifically limited in embodiments of this application.

The transceiver 503 may use any transceiver-type apparatus, and is configured to communicate with another device or a communication network such as the Ethernet, a radio access network (radio access network, RAN), or a wireless local area network (wireless local area network, WLAN). The transceiver 503 includes a transmitter (transmitter, Tx) and a receiver (receiver, Rx).

The output device 504 communicates with the processor 501, and may display information in a plurality of manners. For example, the output device 504 may be a liquid crystal display (liquid crystal display, LCD), a light-emitting diode (light-emitting diode, LED) display device, a cathode ray tube (cathode ray tube, CRT) display device, or a projector (projector).

The input device 505 communicates with the processor 501, and may receive an input from a user in a plurality of manners. For example, the input device 505 may be a mouse, a keyboard, a touchscreen device, a sensing device, or the like.

The network device includes at least one processor 401, at least one transceiver 403, and at least one network interface 404. Optionally, the network device may further include at least one memory 402. The processor 401, the memory 402, the transceiver 403, and the network interface 404 are connected through a communication line. The network interface 404 is configured to be connected to a core network device through a link (for example, an S1 interface), or connected to a network interface of another network device through a wired or wireless link (for example, an X2 interface) (not shown in FIG. 5). This is not specifically limited in embodiments of this application. In addition, for related descriptions about the processor 401, the memory 402, and the transceiver 403, refer to the descriptions about the processor 501, the memory 502, and the transceiver 503 in the terminal device. Details are not described herein again.

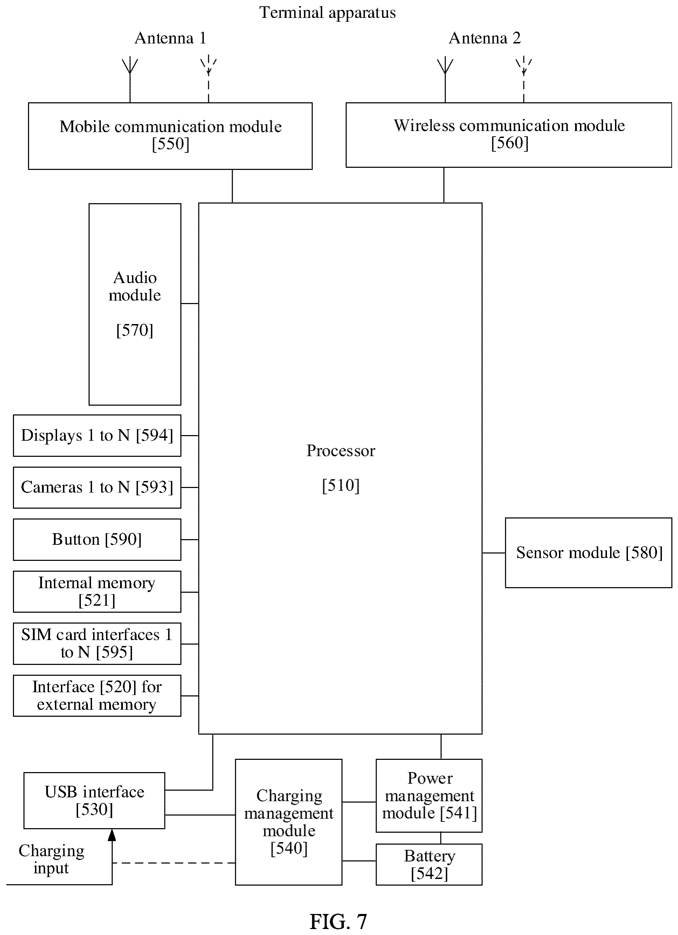

With reference to a diagram of a structure of the terminal device shown in FIG. 6, for example, FIG. 7 shows a specific form of a structure of a terminal device according to an embodiment of this application.

In some embodiments, a function of the processor 501 in FIG. 6 may be implemented by a processor 510 in FIG. 7.

In some embodiments, a function of the transceiver 503 in FIG. 6 may be implemented by an antenna 1, an antenna 2, a mobile communication module 550, a wireless communication module 560, and the like in FIG. 7. The mobile communication module 550 may provide a solution that is applied to the terminal device and that includes a wireless communication technology such as LTE, NR, or future mobile communication. The wireless communication module 560 may provide a solution that is applied to the terminal device and that includes a wireless communication technology such as a WLAN (for example, a Wi-Fi network), Bluetooth (Bluetooth, BT), a global navigation satellite system (global navigation satellite system, GNSS), frequency modulation (frequency modulation, FM), near field communication (near field communication, NFC), or infrared. In some embodiments, in the terminal device, the antenna 1 is coupled to the mobile communication module 550, and the antenna 2 is coupled to the wireless communication module 560, so that the terminal device can communicate with a network and another device according to a wireless communication technology.

In some embodiments, a function of the memory 502 in FIG. 6 may be implemented by an internal memory 521, an external memory connected to an interface 520 for external memory, or the like in FIG. 7.

In some embodiments, a function of the output device 504 in FIG. 6 may be implemented by a display 594 in FIG. 7.

In some embodiments, a function of the input device 505 in FIG. 6 may be implemented by a mouse, a keyboard, a touchscreen device, or a sensor module 580 in FIG. 7.

In some embodiments, as shown in FIG. 7, the terminal device may further include one or more of an audio module 570, a camera 593, a button 590, a subscriber identity module (subscriber identity module, SIM) card interface 595, a universal serial bus (universal serial bus, USB) interface 530, a charging management module 540, a power management module 541, and a battery 542.

It may be understood that the structure shown in FIG. 7 does not constitute a specific limitation on the terminal device. For example, in some other embodiments of this application, the terminal device may include more or fewer components than those shown in the figure, or combine some components, or split some components, or have different component arrangements. The components shown in the figure may be implemented by hardware, software, or a combination of software and hardware.

With reference to FIG. 1 to FIG. 7, the following describes, by using an example in which the network device 20 and any terminal device 30 shown in FIG. 5 interact with each other, the communication method provided in embodiments of this application.

It should be noted that names of messages between network elements, names of parameters in the messages, or the like in the following embodiments of this application are merely examples, and there may be other names in a specific implementation. This is not specifically limited in embodiments of this application.

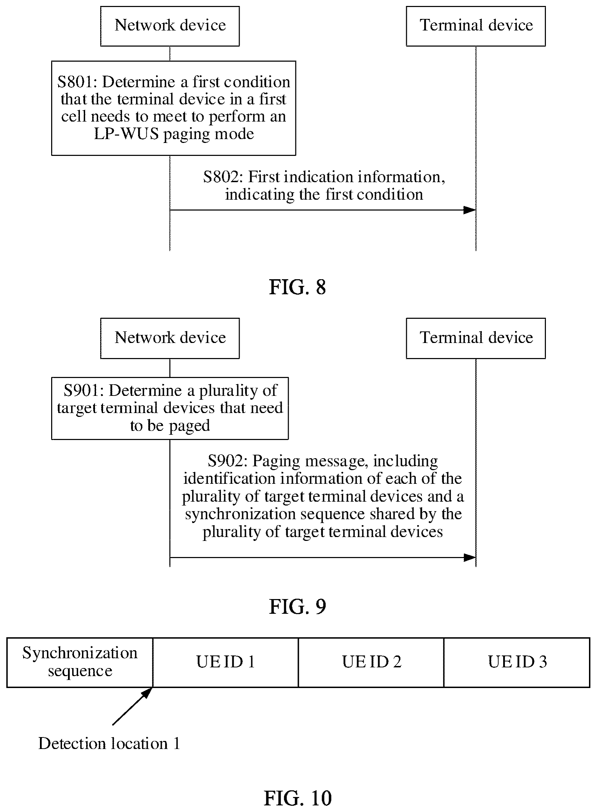

FIG. 8 shows a communication method according to an embodiment of this application. In FIG. 8, the method is described by using an example in which a network device and a terminal device are execution bodies of the interaction example. However, the execution bodies of the interaction example are not limited in this application. For example, the network device in FIG. 8 may alternatively be a chip, a chip system, or a processor that supports the network device in implementing the method, or may be a logic module or software that can implement all or some functions of an application function network element. The terminal device in FIG. 8 may alternatively be a chip, a chip system, or a processor that supports the terminal device in implementing the method, or may be a logic module or software that can implement all or some functions of a first network element. The communication method includes S801 and S802.

S801: The network device determines a first condition that a terminal device supporting an LP-WUS paging mode in a first cell needs to meet to perform the LP-WUS paging mode.

S802: The network device sends first indication information to the terminal device, and correspondingly, the terminal device receives the first indication information. The first indication information indicates the first condition.

Based on the communication method provided in this embodiment of this application, the network device may indicate, to the terminal device, the first condition that the terminal device supporting the LP-WUS paging mode in the first cell needs to meet to perform the LP-WUS paging mode, that is, only a terminal device that meets the first condition can perform the LP-WUS paging mode, to avoid that all terminal devices perform the LP-WUS paging mode or none of the terminal devices performs the LP-WUS paging mode, thereby meeting a requirement of the terminal device for low power consumption as far as possible without reducing performance of a network side.

An application scenario of the communication method shown in FIG. 8 may be that a network side supports both the LP-WUS paging mode and a legacy paging mode.

The following describes S801 and S802 in detail.

In S801, the first cell is any one of one or more cells served by the network device. Alternatively, the first cell is a serving cell of the network device.

In a possible implementation, the network device may autonomously determine the first condition. In another possible implementation, the network device may alternatively determine the first condition based on information that is from a core network device and that indicates the first condition. In this implementation, the first cell is any one of one or more cells served by the core network device. After determining the first condition, the core network device sends the indication information indicating the first condition to the network device serving the first cell.

Optionally, for different first cells, different first conditions may be determined. Alternatively, for different first cells, a same first condition may be determined. Whether different first cells correspond to different first conditions depends on a specific implementation of determining the first condition by the network device or the core network device. This is not specifically limited in embodiments of this application.

Optionally, the network device or the core network device may determine the first condition based on a current status of the first cell. For example, the network device or the core network device may determine the first condition based on current load of the first cell. If the current load of the first cell is relatively high, the network device or the core network device may determine a relatively loose first condition, so that most terminal devices supporting the LP-WUS paging mode in the first cell can meet the first condition, so that the LP-WUS paging mode can be performed, and the cell load can be reduced.

Alternatively, the network device or the core network device may determine the first condition based on an energy saving requirement of the terminal device supporting the LP-WUS paging mode in the first cell. For example, if there are a relatively large quantity of terminal devices that have an energy saving requirement in terminal devices supporting the LP-WUS paging mode in the first cell, the network device or the core network device may determine a relatively strict first condition, to avoid that most terminal devices supporting the LP-WUS paging mode in the first cell can meet the first condition to perform the LP-WUS paging mode, thereby avoiding reducing a cell throughput.

Optionally, the network device or the core network device may determine, based on information reported by the terminal device, whether the terminal device has an energy saving requirement. For example, the terminal device may report, to the network device, a notification message indicating that the terminal device has an energy saving requirement or is being charged. For another example, before switching from a connected state to an idle state, the terminal device reports, to the network device, that a reason why the terminal device switches to the idle state is that the terminal device has an energy saving requirement or needs to be charged.

Certainly, the network device or the core network device may alternatively determine the first condition in another manner. This is not limited in embodiments of this application.

In this embodiment of this application, a plurality of preset thresholds respectively corresponding to a plurality of manners of determining the first condition may be different or may be the same.

The following describes several example first conditions provided in this embodiment of this application.

In a possible implementation, the first condition may include supporting the LP-WUS paging mode. In other words, a terminal device supporting the LP-WUS paging mode in the first cell can perform the LP-WUS paging mode.

Optionally, when the current load of the first cell is less than a preset threshold, the network device or the core network device may determine that the first condition is supporting the LP-WUS paging mode. Alternatively, when a quantity of terminal devices having an energy saving requirement in terminal devices supporting the LP-WUS paging mode in the first cell is less than a corresponding preset threshold, the network device or the core network device may determine that the first condition is supporting the LP-WUS paging mode. Alternatively, when a proportion of terminal devices having an energy saving requirement in terminal devices supporting the LP-WUS paging mode in the first cell is less than a corresponding preset threshold, the network device may determine that the first condition is that the terminal device has an energy saving requirement.

In a possible implementation, the first condition may include that a system identification number (UE ID) of the terminal device meets a preset relationship. In other words, in terminal devices supporting the LP-WUS paging mode in the first cell, a terminal device whose UE ID meets the preset relationship can perform the LP-WUS paging mode.

Optionally, the preset relationship may be an odd number, an even number, or a preset formula. For example, the first condition may be that the UE ID of the terminal device is an odd number. For another example, the first condition may be that the UE ID of the terminal device is an even number. For another example, the first condition may be that the UE ID of the terminal device satisfies UE ID mod 4=0.

Optionally, when the current load of the first cell is greater than a preset threshold, the network device or the core network device may determine that the first condition is that an identification number (UE ID) of the terminal device meets a preset relationship.

Optionally, the preset relationship that the UE ID of the terminal device needs to meet in the first condition may be determined based on a value relationship between the current load of the first cell and the preset threshold. For example, if the current load of the first cell greatly exceeds the preset threshold, the network device or the core network device may select a preset relationship that can be met by UE IDs of only a very small quantity of terminal devices, for example, UE ID mod 4=0. If the current load of the first cell slightly exceeds the preset threshold, the network device or the core network device may select a preset relationship that can be met by UE IDs of some terminal devices, for example, the UE ID is an odd number or an even number.

In a possible implementation, the first condition may include that the terminal device has an energy saving requirement. In other words, in terminal devices supporting the LP-WUS paging mode in the first cell, a terminal device that has an energy saving requirement can perform the LP-WUS paging mode.

Optionally, when the current load of the first cell is less than a preset threshold, the network device or the core network device may determine that the first condition is that the terminal device has an energy saving requirement. Alternatively, when a quantity of terminal devices having an energy saving requirement in terminal devices supporting the LP-WUS paging mode in the first cell is less than a corresponding preset threshold, the network device or the core network device may determine that the first condition is that the terminal device has an energy saving requirement. Alternatively, when a proportion of terminal devices having an energy saving requirement in terminal devices supporting the LP-WUS paging mode in the first cell is less than a corresponding preset threshold, the network device may determine that the first condition is that the terminal device has an energy saving requirement.

In S802, the network device may send the first indication information to any terminal device in the first cell.

Optionally, the network device may send the first indication information in a broadcast manner.

Optionally, the first indication information may be carried in a system message. For example, the first indication information may be carried in a message such as a SIB1, a SIB2, ..., or a SIBX.

Optionally, the first indication information may be a newly added field or an existing field that is reused, and the field may occupy 1 bit (bit), or may occupy a plurality of bits. In a possible implementation, the first condition may be indicated by using a bit value of the first indication information.

For example, it is assumed that the first indication information occupies 1 bit. When a value of the bit is 0, it may indicate that the first condition is supporting the LP-WUS paging mode. When a value of the bit is 1, it may indicate that the first condition is that a UE ID of the terminal device meets a preset relationship. Alternatively, when a value of the bit is 1, it may indicate that the first condition is supporting the LP-WUS paging mode. When a value of the bit is 0, it may indicate that the first condition is that the terminal device has an energy saving requirement. For another example, if the first indication information occupies 2 bits, and the first condition is that the UE ID of the terminal device meets the preset relationship, the preset relationship that the UE ID of the terminal device needs to meet may be indicated by using a bit sequence of the 2 bits in the first indication information.

After receiving the first indication information, the terminal device may determine, based on the first condition indicated by the first indication information, whether the terminal device meets the first condition. If the first condition is met, the terminal device determines to use the LP-WUS paging mode. Further, if the first condition is not met, the terminal device may use the legacy paging mode.

The actions of the terminal device in steps S801 and S802 may be performed by the terminal device instructed by the processor 501 shown in FIG. 6 by invoking the application program code stored in the memory 502. The actions of the network device in steps S801 and S802 may be performed by the network device instructed by the processor 401 shown in FIG. 6 by invoking the application program code stored in the memory 402.

FIG. 9 shows another communication method according to an embodiment of this application. In FIG. 9, the method is described by using an example in which a network device and a terminal device are execution bodies of the interaction example. However, the execution bodies of the interaction example are not limited in this application. For example, the network device in FIG. 9 may alternatively be a chip, a chip system, or a processor that supports the network device in implementing the method, or may be a logic module or software that can implement all or some functions of an application function network element. The terminal device in FIG. 9 may alternatively be a chip, a chip system, or a processor that supports the terminal device in implementing the method, or may be a logic module or software that can implement all or some functions of a first network element. The communication method includes S901 and S902.

S901: The network device determines a plurality of target terminal devices that need to be paged.

S902: The network device sends a paging message to a first terminal device, where the first terminal device is any terminal device among the plurality of target terminal devices, and the paging message includes identification information of each of the plurality of target terminal devices and a synchronization sequence shared by the plurality of target terminal devices.

Based on the communication method provided in this embodiment of this application, when a network side simultaneously pages a plurality of terminal devices, identification information of the plurality of terminal devices may be combined in a same paging message, and a same synchronization sequence may be shared, thereby reducing a waste of resource overheads caused by repeated sending of the synchronization sequence, and reducing time-frequency resource overheads for transmitting the paging message.

An application scenario of the communication method shown in FIG. 9 may be that both the network side and the target terminal device support an LP-WUS paging mode.

The following describes S901 and S902 in detail.

In S901, a core network device determines the plurality of target terminal devices that need to be paged, and generates a paging message to be sent to the plurality of target terminal devices. The paging message includes the identification information of each of the plurality of target terminal devices and the synchronization sequence shared by the plurality of target terminal devices.

Optionally, in the paging message, there may be no interval between identification information of adjacent target terminal devices, or there is no vacant bit. Alternatively, in the paging message, an interval between identification information of adjacent target terminal devices may be agreed on/defined in advance.

Optionally, the identification information of the target terminal device in the paging message may be UE-specific, for example, a UE ID of the target terminal device, an international mobile subscriber identity (international mobile subscriber identity, IMSI), a temporary mobile subscriber identity (temporary mobile subscriber identity, TMSI) of the target terminal device, or other identification information that can identify the target terminal device. Alternatively, the identification information of the target terminal device in the paging message may be group-specific.

For example, it is assumed that three target terminal devices need to be paged, and each of the three target terminal devices has a corresponding UE ID. The paging message generated by the core network device may be shown in FIG. 10, and includes a synchronization sequence shared by the three target terminal devices and respective UE IDs of the three target terminal devices: a UE ID 1, a UE ID 2, and a UE ID 3.

After generating the paging message, the core network device sends the paging message to the network device.

In a possible implementation, the core network device may send the paging message to network devices corresponding to all cells within coverage of the core network device.

In another possible implementation, the core network device may send, based on an area in which each target terminal device is located, the paging message to a network device corresponding to the area in which each target terminal device is located. Optionally, in this implementation, the core network device may indicate, in the paging message, identification information of the area in which each target device is located.

For example, the area in which the target terminal device is located may be a tracking area (tracking area, TA) in which the target terminal device is located. The identification information of the area in which the target terminal device is located may be a TAI (tracking area identity, TAI).

The network device that receives the paging message may determine, based on the identification information of the target terminal device in the paging message, the target terminal device that needs to be paged.

In S902, the network device that receives the paging message determines, based on the identification information of the target terminal device that needs to be paged by the network device in the paging message, a time-frequency resource for sending the paging message in a paging cycle.

Optionally, if the paging message does not include the identification information of the area in which the target terminal device is located, the network device may consider that the identification information of each target terminal device in the paging message is identification information of a target terminal device that needs to be paged by the network device.

Optionally, if the paging message includes the identification information of the area in which the target terminal device is located, the network device may determine, based on the identification information of the area, an area including any cell served by the network device, and determine a target terminal device located in the area as a target terminal device that needs to be paged by the network device.

The network device may determine, based on a configured parameter, the time-frequency resource used to send the paging message in the paging cycle, and send the paging message by using the determined time-frequency resource. For example, the network device may determine a PF used to send the paging message, a PO in the PF, and one or more monitoring windows used to send the paging message in the PO.

Optionally, the network device may determine, based on the identification information of the target terminal device and a preset formula used to calculate a time-frequency resource, the time-frequency resource used to send the paging message. For example, the network device may substitute the identification information of the target terminal device that needs to be paged into a preset formula used to calculate a PF, a PO, or a monitoring window, and calculate an SFN of a PF, an index of a PO, or an index of a monitoring window that corresponds to the identification information of the target terminal device that needs to be paged, to obtain the time-frequency resource required for paging the target terminal device. For the preset formula used to calculate the time-frequency resource, refer to a formula in an existing protocol. Certainly, the preset formula may be a formula different from that in the existing protocol. This is not specifically limited in embodiments of this application.

Further, after receiving the paging message, the target terminal device needs to determine whether the paging message includes the identification information of the target terminal device.

Optionally, after receiving the synchronization sequence, the target terminal device may perform comparison with the identification information of the target terminal device by bit (that is, bit) starting from a first detection location (that is, a first bit of identification information of a 1^{st} terminal device, for example, a detection location 1 in FIG. 10). If the identification information of the target terminal device is detected, it is considered that the network side is paging the target terminal device currently. Because the target terminal device uses the LP-WUS paging mode, the target terminal device may wake up a main receiver to perform a subsequent operation. If the identification information of the target terminal device is not detected, the terminal device considers that the network side does not page the terminal device currently, and the terminal device may continue to detect a paging message in a corresponding PO within a subsequent paging cycle. There may be no interval between a first detection location and an end location of the synchronization sequence (that is, a next bit of an end bit of the synchronization sequence is the first detection location), or there may be a preset interval between the first detection location and the end location of the synchronization sequence.

However, in this method for bit-by-bit detection starting from the first detection location, the terminal device needs to perform detection on each bit starting from the first detection location. In other words, the terminal device needs to detect the paging message from the beginning to the end of the paging message. Therefore, in this detection method, detection complexity of the terminal device is relatively high. Therefore, an embodiment of this application provides a method for indicating a detection location of identification information of a terminal device. Before starting to detect the identification information, the terminal device is notified of a location from which the detection should start, thereby reducing detection complexity of the terminal device. The following describes the method by using an example in which the first terminal device receives a paging message, and identification information of a terminal device included in the paging message is a UE ID of the terminal device.

In the method, the paging message includes second indication information, and the second indication information indicates a detection location corresponding to identification information of the first terminal device in the paging message.

The detection location that corresponds to the identification information of the first terminal device and that is indicated by the second indication information is a location of a first bit of the identification information of the first terminal device in the paging message. The first terminal device may determine, based on the second indication information, the detection location corresponding to the identification information of the first terminal device in the paging message, start detection from the location, and skip a detection location corresponding to a UE ID that does not need to be detected.

Optionally, the second indication information may be included in another piece of control information carried in the paging message. In the paging message, the control information may be located after the synchronization sequence and before a first UE ID. In other words, a next bit of a last bit of the control information is the first bit of the first UE ID. It may be understood that the first bit of the first UE ID in the paging message is the first detection location at which the terminal device may start to perform detection in the paging message.

Further, in addition to the second indication information, the control information carried in the paging message may further include some other paging-related information, for example, warning message indication information and wake-up manner indication information. The warning message indication information may indicate that a location that is in the paging message and that originally carries a UE ID carries a warning message, and all terminal devices that receive the paging message receive the warning message regardless of the UE ID that is originally carried. The wake-up manner indication information may indicate whether the terminal device directly wakes up the main receiver to perform a random access procedure or wakes up the main receiver to prepare to receive a paging message in a legacy mode after receiving the UE ID of the terminal device.

Optionally, a location of the last bit of the control information in the paging message may be learned in a manner such as preconfiguring a length of the control information, indicating a length of the control information by using the control information, or detecting the last bit of the control information, so as to determine a location, in the paging message, of the first bit of the first UE ID in the paging message, that is, determine a location of the first detection location in the paging message.

Alternatively, the second indication information may be directly carried in the paging message. The second indication information may be located after the synchronization sequence and before the first UE ID. In other words, a next bit of a last bit of the second indication information is the first bit of the first UE ID, that is, the first detection location in the paging message.

Optionally, a location of the last bit of the second indication information in the paging message may be learned in a manner such as preconfiguring a length of the second indication information, indicating a length of the second indication information by using the second indication information, or detecting the last bit of the second indication information, so as to determine a location of the first detection location in the paging message.

The following describes several specific implementations of the second indication information provided in embodiments of this application.

Implementation 1: The second indication information indicates a quantity of UE IDs of target terminal devices included in the paging message and a length of a UE ID of one target terminal device corresponding to each detection location in the paging message.

In this implementation, one detection location in the paging message corresponds to a UE ID of one target terminal device. The second indication information may sequentially indicate a length of each UE ID according to an order of the UE IDs in the paging message, that is, indicate the length of the UE ID corresponding to each detection location. Based on this, the first terminal device may determine, with reference to the first detection location in the paging message, a location of each detection location in the paging message and the length of the UE ID corresponding to each detection location. Therefore, the first terminal device may skip a detection location corresponding to a UE ID whose length is different from that of the UE ID of the first terminal device, and start detection from a detection location corresponding to a UE ID whose length is the same as that of the UE ID of the first terminal device. If it is found in a detection process that a UE ID corresponding to the detection location is different from the UE ID of the first terminal device, the first terminal device skips the detection location, and performs detection at a next detection location at which a UE ID has the same length.

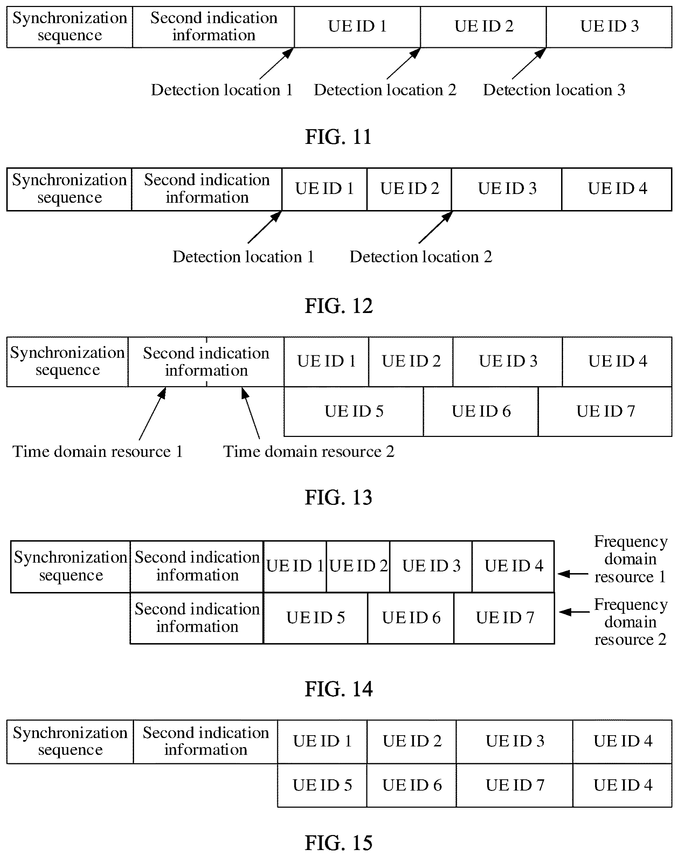

For example, as shown in FIG. 11, the paging message includes three UE IDs, one UE ID corresponds to one detection location, and the second indication information may indicate a length of a UE ID corresponding to each detection location.

In this implementation, the first terminal device can learn of a detection location of a UE ID whose length is different from that of the UE ID of the first terminal device, so as to skip a quantity of bits of a UE ID that does not need to be detected, thereby reducing unnecessary detection overheads.

Optionally, when there is a one-to-one mapping relationship between a type of a UE ID and a length of the UE ID, the second indication information may implicitly indicate the length of the UE ID by indicating the type of the UE ID. For example, it is assumed that types of UE IDs include a type 1, a type 2, and a type 3. The type 1 indicates a UE ID whose length is 8 bits, the type 2 indicates a UE ID whose length is 6 bits, and the type 3 indicates a UE ID whose length is 4 bits. The second indication information may indicate a type of a UE ID of one target terminal device corresponding to each detection location, to indicate a length of the UE ID of the target terminal device corresponding to each detection location.

Optionally, the second indication information may indicate a length or a type of the UE ID by using a value of a bit or a bit sequence of a plurality of bits.

For example, it is assumed that a value of 1 bit indicates a length of one UE ID, 0 may represent that the length of the UE ID is 4 bits, and 1 may represent that the length of the UE ID is 6 bits. In this case, if a value of bits that are in the second indication information and that indicate the length of the UE ID of one target terminal device corresponding to each detection location is "011", it indicates that a length of the first UE ID in the paging message is 4 bits, a length of the second UE ID is 6 bits, and a length of the third UE ID is 6 bits.

For another example, it is assumed that a length of a UE ID is indicated by using a bit sequence of 2 bits, 00 may represent that the length of the UE ID is 4 bits, 01 may represent that the length of the UE ID is 6 bits, 10 may represent that the length of the UE ID is 8 bits, and 11 may represent that the length of the UE ID is 10 bits.

Optionally, the second indication information may indicate, by using a value of a bit or a bit sequence of a plurality of bits, the quantity of UE IDs of the target terminal devices included in the paging message.

For example, it is assumed that the quantity of UE IDs of the target terminal devices included in the paging message is indicated by using a bit sequence of 3 bits, 001 may represent that the paging message includes one UE ID, 010 may represent that the paging message includes two UE IDs, 011 may represent that the paging message includes three UE IDs, 100 may represent that the paging message includes four UE IDs, 101 may represent that the paging message includes five UE IDs, 110 may represent that the paging message includes six UE IDs, and 111 may represent that the paging message includes seven UE IDs.

Optionally, in this implementation, the second indication information may be divided into information used to indicate the quantity of UE IDs of the target terminal devices included in the paging message and information used to indicate the length of the UE ID of one target terminal device corresponding to each detection location.

For example, one field in the second indication information may indicate the quantity of UE IDs of the target terminal devices included in the paging message, and another field may indicate the length of the UE ID of one target terminal device corresponding to each detection location.

Optionally, in this implementation, the second indication information may indicate, by using a quantity of bits of the second indication information, the quantity of UE IDs of the target terminal devices included in the paging message, and indicate, by using a bit value/bit sequence of the second indication information, the length of the UE ID of one target terminal device corresponding to each detection location.

For example, it is assumed that in the second indication information, bits 00 may represent that the length of the UE ID is 4 bits, 01 may represent that the length of the UE ID is 6 bits, 10 may represent that the length of the UE ID is 8 bits, and 11 may represent that the length of the UE ID is 10 bits. In this case, if the second indication information is "001011", it may indicate that a length of the first UE ID is 4, a length of the second UE ID is 8, and a length of the third UE ID is 10. In addition, the quantity of bits in the second indication information is 6, and 2 bits represent a length of one UE ID, so that it can be learned that the paging message includes three UE IDs.

Optionally, in this implementation, the second indication information may alternatively indicate an end location of a last UE ID in the paging message, or it may be understood that the second indication information may indicate that there is no UE ID subsequently. Specifically, in this implementation, the second indication information may indicate a length or a type of the UE ID by using a bit sequence of a plurality of bits. A bit sequence may be divided from possible bit sequences of the plurality of bits to indicate that there is no UE ID subsequently, so that the first terminal device can determine that there is no UE ID subsequently, and the first terminal device does not need to perform detection.

For example, it is assumed that in the second indication information, bits 00 may represent that the length of the UE ID is 4 bits, 01 may represent that the length of the UE ID is 6 bits, 10 may represent that the length of the UE ID is 8 bits, and 11 may represent that there is no UE ID subsequently. In this case, if the second indication information is "001011", it may indicate that a length of the first UE ID is 4, a length of the second UE ID is 8, and there is no UE ID after the second UE ID.

Implementation 2: The second indication information indicates a quantity of pieces of identification information of target terminal devices of one length corresponding to each detection location in the paging message.

In this implementation, it may be considered that UE IDs of a same length belong to a same type. In the paging message, UE IDs of target terminal devices of a same length are arranged together, and are corresponding to one detection location. In other words, one detection location in the paging message corresponds to one or more UE IDs of a same length. The second indication information may indicate, based on an order of UE IDs of different lengths in the paging message, a quantity of UE IDs of one length corresponding to each detection location in the paging message, that is, indicate a total length of one or more UE IDs of a same type corresponding to each detection location. Based on this, the first terminal device may determine, with reference to the first detection location in the paging message, a location of each detection location in the paging message and the type of the UE ID corresponding to each detection location. Therefore, the first terminal device may skip a detection location corresponding to a UE ID whose type is different from that of the UE ID of the first terminal device, and start detection from a detection location corresponding to a UE ID whose type is the same as that of the UE ID of the first terminal device.

For example, as shown in FIG. 12, the paging message includes four UE IDs. A UE ID 1 and a UE ID 2 have a same length, are UE IDs of a same type, are arranged together, and correspond to one detection location. A UE ID 3 and a UE ID 4 have a same length, are UE IDs of a same type, are arranged together, and correspond to one detection location.

In this implementation, the first terminal device can learn of a detection location of a UE ID whose type is different from that of the UE ID of the first terminal device, so as to skip a quantity of bits of a UE ID that does not need to be detected, thereby reducing unnecessary detection overheads.

Optionally, in this implementation, an arrangement order of different types of UE IDs in the paging message may be pre-agreed on by the network side and the terminal device, or may be indicated by the network side to the terminal device. For example, the control information may include information indicating the arrangement order. The arrangement order of different types of UE IDs in the paging message is not specifically limited in embodiments of this application. For example, in an example shown in FIG. 12, the UE ID 3 and the UE ID 4 may be arranged before the UE ID 1 and the UE ID 2.

Optionally, the second indication information may indicate, by using a value of a bit or a bit sequence of a plurality of bits, the quantity of pieces of identification information of the target terminal devices of one length corresponding to each detection location.

For example, it is assumed that there are M types of UE IDs that may be included in the paging message, where M may be configured by a network or predefined in a protocol. A quantity of an m^{th} type of UE IDs is *Nₘ.* Assuming that *Nₘ*=3*,* the second indication information may indicate, by using a bit sequence "011", that the quantity of the m^{th} type of UE IDs in the paging message is 3. A manner of indicating a quantity of another type of UE IDs may be deduced by analogy.

For example, it is assumed that the arrangement order of different types of UE IDs in the paging message is "first length-second length-third length". The second indication information may indicate, by using a bit sequence "110011111", that a quantity of UE IDs of the first length corresponding to a first detection location in the paging message is 6, a quantity of UE IDs of the second length corresponding to a second detection location is 3, and a quantity of UE IDs of the third length corresponding to a third detection location is 7.

Optionally, the foregoing implementation 1 and implementation 2 may also be applied in combination.

As described in the foregoing specific implementation of the second indication information, the second indication information may indicate a length of one or more UE IDs corresponding to each detection location in the paging message.

Optionally, when a plurality of UE IDs in the paging message are located on different frequency domain resources, the second indication information may indicate lengths of one or more UE IDs corresponding to each detection location on different frequency domain resources. The following provides descriptions with reference to different cases in which a plurality of UE IDs in the paging message are located on different frequency domain resources.

Case 1: In the paging message, a plurality of UE IDs are located on different frequency domain resources, and UE IDs are arranged in different manners on different frequency domain resources. In other words, locations, in time domain, of detection locations on different frequency domain resources cannot be aligned. For example, in the paging message, on a frequency domain resource 1, UE IDs are arranged in an order of length 1-length 2-length 3, and on a frequency domain resource 2, UE IDs are arranged in an order of length 2-length 3-length 1. Therefore, a detection location on the frequency domain resource 1 cannot be aligned with a detection location on the frequency domain resource 2 in time domain.

In a possible implementation, second indication information on different time domain resources may separately indicate lengths of one or more UE IDs corresponding to each detection location on different frequency domain resources.

For example, it is assumed that one UE ID in the paging message corresponds to one detection location. As shown in FIG. 13, the paging message includes seven UE IDs. A UE ID 1, a UE ID 2, a UE ID 3, and a UE ID 4 are located on a frequency domain resource 1, and a UE ID 5, a UE ID 6, and a UE ID 7 are located on a frequency domain resource 2. In addition, as shown in FIG. 13, detection locations on the frequency domain resource 1 and the frequency domain resource 2 cannot be aligned.

Correspondingly, second indication information on the time domain resource 1 may indicate a length corresponding to each detection location on the frequency domain resource 1. Second indication information on the time domain resource 2 may indicate a length of a UE ID corresponding to each detection location on the frequency domain resource 2. Optionally, frequency domain resources on which the second indication information on the time domain resource 1 and the time domain resource 2 is located may be a frequency domain resource 1 or a frequency domain resource 2 shown in FIG. 13.

In another possible implementation, second indication information on different frequency domain resources may separately indicate lengths of one or more UE IDs corresponding to each detection location on different frequency domain resources. Optionally, UE IDs on different frequency domain resources may be arranged in different manners.

For example, it is assumed that one UE ID in the paging message corresponds to one detection location. As shown in FIG. 14, the paging message includes seven UE IDs. A UE ID 1, a UE ID 2, a UE ID 3, and a UE ID 4 are located on a frequency domain resource 1, and a UE ID 5, a UE ID 6, and a UE ID 7 are located on a frequency domain resource 2. In addition, as shown in FIG. 14, on the frequency domain resource 1 and the frequency domain resource 2, UE IDs are arranged in different manners, and detection locations cannot be aligned.

Correspondingly, second indication information on the frequency domain resource 1 indicates a length corresponding to each detection location on the frequency domain resource 1. Second indication information on the frequency domain resource 2 indicates a length of a UE ID corresponding to each detection location on the frequency domain resource 2.

Case 2: In the paging message, a plurality of UE IDs are located on different frequency domain resources, and UE IDs are arranged in a same manner on different frequency domain resources. In other words, locations, in time domain, of detection locations on different frequency domain resources can be aligned.

Optionally, whether UE IDs on different frequency domain resources are arranged in a same manner may be predefined in a protocol, or may be pre-agreed on by the network side and the terminal device.

In this case, second indication information on a same time-frequency resource may indicate lengths of one or more UE IDs corresponding to each detection location on different frequency domain resources.

Optionally, the second indication information may separately indicate, according to a preset order, lengths of UE IDs corresponding to detection locations on different frequency domain resources.

Alternatively, the second indication information may indicate a length of a UE ID corresponding to a detection location on one frequency domain resource, and does not need to indicate a length of a UE ID corresponding to a detection location on another frequency domain resource. After receiving the second indication information, the terminal device also determines a length, indicated by the second indication information, of a UE ID corresponding to a detection location on one frequency domain resource as a length of a UE ID corresponding to a detection location on another frequency domain resource.

For example, it is assumed that one UE ID in the paging message corresponds to one detection location. As shown in FIG. 15, the paging message includes seven UE IDs. A UE ID 1, a UE ID 2, a UE ID 3, and a UE ID 4 are located on a frequency domain resource 1, and a UE ID 5, a UE ID 6, a UE ID 7, and a UE ID 8 are located on a frequency domain resource 2. In addition, as shown in FIG. 15, detection locations on the frequency domain resource 1 and the frequency domain resource 2 can be aligned.

Correspondingly, the second indication information may indicate a length of a UE ID corresponding to each detection location on the frequency domain resource 1 and a length of a UE ID corresponding to each detection location on the frequency domain resource 2. For example, the second indication information may first indicate lengths of the UE ID 1, the UE ID 2, the UE ID 3, and the UE ID 4 on the frequency domain resource 1, and then indicate lengths of the UE ID 5, the UE ID 6, the UE ID 7, and the UE ID 8 on the frequency domain resource 2. Alternatively, based on a same arrangement manner of the UE IDs on the frequency domain resource 1 and the frequency domain resource 2, the second indication information may indicate lengths of the UE ID 1, the UE ID 2, the UE ID 3, and the UE ID 4 on the frequency domain resource 1, and does not need to indicate lengths of the UE ID 5, the UE ID 6, the UE ID 7, and the UE ID 8 on the frequency domain resource 2.

In case 1 and case 2, for a specific implementation in which the second indication information indicates lengths of UE IDs corresponding to each detection location on different frequency domain resources, refer to the foregoing specific implementation 1 and implementation 2 of the second indication information. Details are not described herein again.

The actions of the terminal device in steps S901 and S902 may be performed by the terminal device instructed by the processor 501 shown in FIG. 6 by invoking the application program code stored in the memory 502. The actions of the network device in steps S901 and S902 may be performed by the network device instructed by the processor 401 shown in FIG. 6 by invoking the application program code stored in the memory 402.

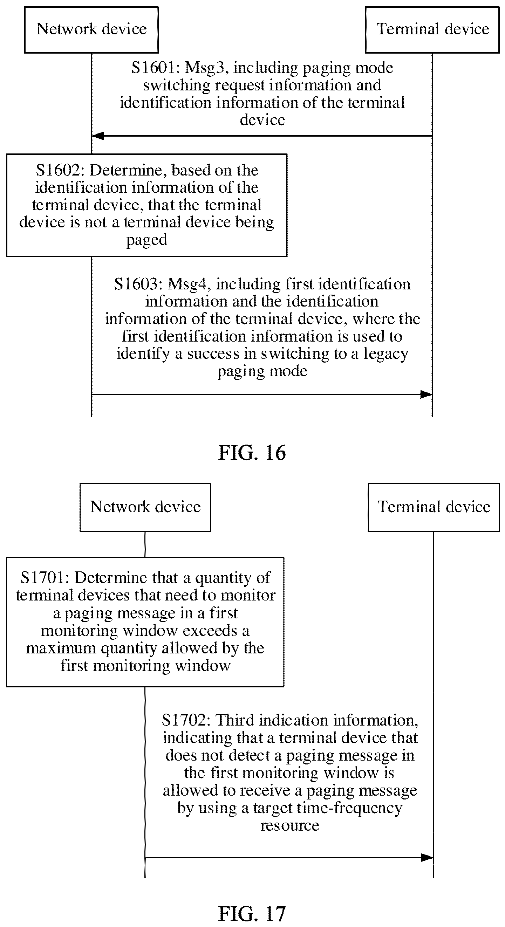

FIG. 16 shows another communication method according to an embodiment of this application. In FIG. 16, the method is described by using an example in which a network device and a terminal device are execution bodies of the interaction example. However, the execution bodies of the interaction example are not limited in this application. For example, the network device in FIG. 16 may alternatively be a chip, a chip system, or a processor that supports the network device in implementing the method, or may be a logic module or software that can implement all or some functions of an application function network element. The terminal device in FIG. 16 may alternatively be a chip, a chip system, or a processor that supports the terminal device in implementing the method, or may be a logic module or software that can implement all or some functions of a first network element. The communication method includes S1601 to S1603.

S1601: The terminal device sends a Msg3 to the network device, and correspondingly, the network device receives the Msg3. The Msg3 includes paging mode switching request information and identification information of the terminal device, and the paging mode switching request information is used to request to switch from an LP-WUS paging mode to a legacy paging mode.

S1602: The network device determines, based on the identification information of the terminal device, that the terminal device is not a terminal device being paged by the network device.

S1603: The network device sends a Msg4 to the terminal device, and correspondingly, the terminal device receives the Msg4. The Msg4 includes first identification information and the identification information of the terminal device, and the first identification information is used to identify a success in switching to the legacy paging mode.

Based on the communication method provided in this embodiment of this application, original functions of the Msg3 and the Msg4 may be changed. The Msg3 and the Msg4 are no longer exchanged to perform random access and establish an RRC connection, but the Msg3 and the Msg4 are exchanged to switch a paging mode. There is no need to first establish an RRC connection and then exchange NAS signaling to switch the paging mode, thereby reducing signaling overheads.

An application scenario of the communication method shown in FIG. 16 may be a scenario of switching between the LP-WUS paging mode and the legacy (legacy) paging mode.

The following describes S1601 to S1603 in detail.

In S1601, the terminal device requests to switch to the legacy paging mode by sending the Msg3 to the network device, where the Msg3 includes the paging mode switching request information and the identification information of the terminal device. The paging mode switching request information is used to request to switch from the LP-WUS paging mode to the legacy paging mode. Correspondingly, after receiving the Msg3, the network device may determine, based on the paging mode switching request information in the Msg3, that the Msg3 is used to request to switch a paging mode instead of being used for random access. In addition, the network device may determine, based on the identification information of the terminal device in the Msg3, which terminal device requests to switch to the legacy paging mode.

Optionally, the paging mode switching request information may be information such as specific identification information or a field.

Optionally, the identification information of the terminal device may be a UE ID, an IMS, a TMSI, or the like.

In S1602, the network device determines, based on the identification information of the terminal device in the Msg3, whether the terminal device is a terminal device being paged by the network device currently. If the terminal device is not a terminal device being paged by the network device, S1603 is performed; otherwise, S1603 is not performed.

Optionally, the network device may determine whether identification information of a terminal device in a paging message from a core network device includes the identification information of the terminal device in the Msg3. If the identification information of the terminal device in the Msg3 is included, the network device determines that the terminal device is a terminal device being paged currently, or if the identification information of the terminal device in the Msg3 is not included, the network device determines that the terminal device is not a terminal device being paged currently.

In S1603, the network device sends a Msg4 to the terminal device. The Msg4 includes the first identification information and the identification information of the terminal device, and the first identification information is used to identify the success in switching to the legacy paging mode. In other words, the network device may notify, by using the Msg4, the terminal device that switching to the legacy paging mode succeeds. The identification information of the terminal device in the Msg4 is used by the terminal device to determine whether the Msg4 is sent to the terminal device.

Correspondingly, after receiving the Msg4, the terminal device may detect whether the Msg4 includes the first identification information, and detect whether the identification information of the terminal device included in the Msg4 is the same as the identification information of the terminal device. If it is determined that the Msg4 includes the first identification information, and it is determined that the identification information of the terminal device included in the Msg4 is the same as the identification information of the terminal device, it may be determined that switching to the legacy paging mode succeeds, and a paging message may be subsequently received in the legacy paging mode. If determining that the Msg4 does not include a UE ID or the included identification information of the terminal device is different from the identification information of the terminal device, the terminal device may determine that paging mode switching fails, and may request the network side to switch a paging mode again.

Optionally, in S1602, after receiving the Msg3, if the network device determines that the terminal device is a terminal device being paged by the network device, the network device may perform S1604:
S1604: The network device sends a Msg4 to the terminal device, where the Msg4 includes the identification information of the terminal device, and the Msg4 is used to page the terminal device. In other words, the Msg4 includes a paging message, and the paging message includes the identification information of the terminal device.

Correspondingly, after receiving the Msg4, the terminal device may detect whether the Msg4 includes the first identification information, and detect whether the identification information of the terminal device included in the Msg4 is the same as the identification information of the terminal device. If it is determined that the Msg4 does not include the first identification information, and it is determined that the identification information of the terminal device included in the Msg4 is the same as the identification information of the terminal device, the terminal device may determine that the Msg4 is used to page the terminal device, and the terminal device may perform a subsequent operation, for example, initiate random access or perform system update. If determining that the Msg4 does not include the identification information of the terminal device or the included identification information of the terminal device is different from the identification information of the terminal device, the terminal device may determine that the Msg4 is not used to page the terminal device, and may request to switch a paging mode again.

Optionally, before the terminal device sends the Msg3, the communication method provided in this embodiment of this application may further include the following steps.

S1605: The terminal device sends a random access preamble, namely, a Msg1, to the network device.

S1606: The network device sends a Msg2 to the terminal device, where the Msg2 is used to configure a resource to be used by the terminal device to send the Msg3. For details, refer to an existing protocol.

In a possible implementation, in S1505, the preamble sent by the terminal device may be used to request to switch to the legacy paging mode. In other words, after receiving the preamble, the network device may determine, based on the preamble, that a purpose of sending the preamble by the terminal device is to request to switch to the legacy paging mode instead of requesting random access.

Optionally, in this implementation, different from an existing preamble used for random access, the preamble sent by the terminal device may be a specially designed preamble used to request to switch a paging mode. For example, it is assumed that there are 64 existing preambles used for random access, and two other preambles may be newly designed as preambles used to request to switch a paging mode.

Alternatively, in this implementation, one or more preambles may be obtained through classification from existing preambles used for random access as preambles used to request to switch a paging mode. For example, it is assumed that there are 64 existing preambles used for random access, and a preamble whose index is 1 and a preamble whose index is 2 may be classified as preambles used to request to switch a paging mode.

Optionally, if the preamble sent by the terminal device in S 1605 is a preamble used to request to switch to the legacy paging mode, in S1601, the Msg3 may not include the paging mode switching request information. In this case, the Msg3 is used to send the identification information of the terminal device to the network device.

In another possible implementation, in S1605, the preamble sent by the terminal device may be an existing preamble used for random access. In this case, the Msg3 includes the paging mode switching request information, and the network device may determine, based on the Msg3, that the terminal device requests to switch a paging mode.

It may be understood that when the Msg3 or the Msg1 is used to notify a network side that the terminal device requests to switch a paging mode, the network side does not consider that the Msg3 or the Msg1 is sent by the terminal device to establish random access. Therefore, the network device does not need to establish an RRC connection for the terminal device, so that the paging mode is switched without establishing an RRC connection, thereby avoiding a large quantity of signaling overheads.

The actions of the terminal device in steps S1601 to S 1605 may be performed by the terminal device instructed by the processor 501 shown in FIG. 6 by invoking the application program code stored in the memory 502. The actions of the network device in steps S1601 to S1605 may be performed by the network device instructed by the processor 401 shown in FIG. 6 by invoking the application program code stored in the memory 402.

FIG. 17 shows another communication method according to an embodiment of this application. In FIG. 17, the method is described by using an example in which a network device and a terminal device are execution bodies of the interaction example. However, the execution bodies of the interaction example are not limited in this application. For example, the network device in FIG. 17 may alternatively be a chip, a chip system, or a processor that supports the network device in implementing the method, or may be a logic module or software that can implement all or some functions of an application function network element. The terminal device in FIG. 17 may alternatively be a chip, a chip system, or a processor that supports the terminal device in implementing the method, or may be a logic module or software that can implement all or some functions of a first network element. The communication method includes S1701 and S1702.

S1701: The network device determines that a quantity of terminal devices that need to monitor a paging message in a first monitoring window exceeds a maximum quantity allowed by the first monitoring window.

S1702: The network device sends third indication information to the terminal device, where the third indication information indicates that a terminal device that does not detect a paging message in the first monitoring window is allowed to receive a paging message by using a target time-frequency resource, and the target time-frequency resource partially overlaps or does not overlap a time-frequency resource occupied by the first monitoring window.

Based on the communication method provided in this embodiment of this application, the network device may send the third indication information to the terminal device, so that a terminal device that does not perform monitoring in an original monitoring window may receive a paging message by using an additional target time-frequency resource without waiting for a next paging cycle, thereby reducing an access delay.

It should be noted that in this embodiment of this application, "monitor" and "listen" may be replaced with each other. For example, the monitoring window may also be referred to as a listening window, and monitoring a paging message by the terminal device may also be referred to as listening to a paging message by the terminal device.

In S1701, after obtaining, from a core network device, a paging message that needs to be delivered for current paging, the network device may determine, based on identification information of a terminal device (for example, a UE ID or a TMSI, where the following uses an example in which the identification information of the terminal device is the UE ID for description) in the paging message, a terminal device that needs to be paged through current paging. In addition, the network device may determine, based on the UE ID of the terminal device that needs to be paged and a preset formula, one or more monitoring windows used to send the paging message. The preset formula includes a formula for calculating an SFN of a PF, a formula for calculating an index of a PO in the PF, and a formula for calculating an index of a monitoring window in the PO. For the preset formula, refer to a formula in an existing protocol. Certainly, the preset formula may be a formula different from that in the existing protocol. This is not specifically limited in embodiments of this application.

Optionally, one paging message may include one synchronization sequence and a UE ID of one terminal device. In other words, the paging message is in one-to-one correspondence with the terminal device. For details, refer to the paging message in the existing protocol shown in FIG. 2. In this case, the network device may obtain a plurality of paging messages, and may determine, based on a UE ID in each paging message, one or more monitoring windows used to send the paging message. For details, refer to a calculation method for calculating a time-frequency resource used to send a paging message in an existing protocol.

Alternatively, one paging message may include UE IDs of a plurality of terminal devices that need to be paged and a synchronization sequence shared by the plurality of terminal devices. For details, refer to the paging message in S901 and S902. In this case, the network device may obtain one paging message, and may determine, based on each UE ID in the paging message, one or more monitoring windows used to send the paging message. For details, refer to descriptions in S901 and S902.

It may be understood that when determining, based on the UE ID in the paging message, the one or more monitoring windows used to send the paging message, the network device may determine a quantity, corresponding to each monitoring window, of terminal devices that need to monitor, in the monitoring window, the currently delivered paging message.

Further, the network device may determine, based on a size of a time-frequency resource in each monitoring window corresponding to the current paging and the quantity, corresponding to each monitoring window, of terminal devices that need to monitor the paging message, whether there is a monitoring window whose time-frequency resource is insufficient to meet a monitoring requirement of the terminal device. Specifically, the network device may determine, based on the size of the time-frequency resource in each monitoring window and a size of a time-frequency resource required for paging one terminal device in each monitoring window, a maximum quantity of terminal devices allowed to be paged in each monitoring window (which may also be referred to as a maximum paging capability of the monitoring window, and is briefly referred to as a maximum quantity allowed by the monitoring window below). Further, the network device may determine, based on the quantity, corresponding to each monitoring window, of terminal devices that need to monitor a paging message in the monitoring window during the current paging, whether the quantity of terminal devices that need to monitor a paging message in the monitoring window exceeds the maximum quantity allowed by the monitoring window.

A monitoring window whose time-frequency resource is insufficient to meet a monitoring requirement of the terminal device may be referred to as a first monitoring window below. In other words, the network device may determine that a quantity of terminal devices that need to monitor a paging message (the paging message delivered during the current paging) in the first monitoring window exceeds a maximum quantity allowed by the first monitoring window, and the network device performs S1702. If the network device determines that the first monitoring window does not exist in one or more monitoring windows corresponding to the current paging, S1702 is not performed.

In S1702, the network device may send the third indication information to the terminal device that needs to monitor a paging message (the paging message delivered during the current paging) in the first monitoring window. The third indication information indicates that a terminal device that does not detect a paging message in the first monitoring window is allowed to receive a paging message by using a target time-frequency resource.

The target time-frequency resource may be understood as an additional time-frequency resource that can be used to monitor a paging message by a terminal device that does not detect a paging message in the first monitoring window. The target time-frequency resource may partially overlap or not overlap a time-frequency resource occupied by the first monitoring window.

The third indication information may be carried in the paging message. Optionally, in the paging message, the third indication information may be located after the synchronization sequence and before the UE ID of the terminal device.

Optionally, when the paging message delivered during the current paging includes UE IDs of a plurality of terminal devices and a synchronization sequence shared by the plurality of terminal devices, that is, a structure of the paging message delivered during the current paging is similar to that of the paging message in S901 and S902, the third indication information may be carried in the control information described in S901 and S902. In this case, the control information may include second indication information, or may not include second indication information.

The following describes several specific implementations of the third indication information provided in embodiments of this application.

Implementation 1: The third indication information indicates, by using a bit value of 1 bit or a bit sequence of a plurality of bits, that the terminal device that does not detect a paging message in the first monitoring window is allowed to receive a paging message by using the target time-frequency resource.

For example, there is a 1-bit field in the paging message. When a value of the bit is 1, it indicates that the terminal device that does not detect a paging message in the first monitoring window is allowed to receive a paging message by using the target time-frequency resource. When a value of the bit is 0, it indicates that the terminal device that does not detect a paging message in the first monitoring window is not allowed to receive a paging message by using the target time-frequency resource. For another example, there is a 2-bit field in the paging message. When the bits of the field are 11, it indicates that the terminal device that does not detect a paging message in the first monitoring window is allowed to receive a paging message by using the target time-frequency resource. When the bits of the field are in another bit sequence, it indicates that the terminal device that does not detect a paging message in the first monitoring window is not allowed to receive a paging message by using the target time-frequency resource.

Implementation 2: The third indication information indicates that the quantity of terminal devices that need to monitor a paging message in the first monitoring window is greater than the maximum quantity allowed by the first monitoring window.

Optionally, the third indication information may indicate a quantity of terminal devices that need to monitor a paging message of the current paging in the first monitoring window. The terminal device determines, based on the third indication information, that the quantity of terminal devices that need to monitor a paging message in the first monitoring window is greater than the maximum quantity allowed by the first monitoring window, and then determines that a network side allows the terminal device that does not detect a paging message in the first monitoring window to receive a paging message by using the target time-frequency resource.

For example, if the maximum quantity allowed by the first monitoring window is X, the network device determines that the quantity of terminal devices that need to monitor a paging message of the current paging in the first monitoring window is M, and M is greater than X, the network device indicates, by using the third indication information, that the quantity of terminal devices that need to monitor a paging message in the first monitoring window is M.

Optionally, the third indication information may indicate that the quantity of terminal devices that need to monitor a paging message of the current paging in the first monitoring window is X+N. X is the maximum quantity allowed by the first monitoring window, and N is a preset positive integer. The terminal device determines, based on the third indication information, that the quantity of terminal devices that need to monitor a paging message in the first monitoring window is greater than the maximum quantity allowed by the first monitoring window, and then determines that a network side allows the terminal device that does not detect a paging message in the first monitoring window to receive a paging message by using the target time-frequency resource.

For example, if the maximum quantity allowed by the first monitoring window is X, the network device determines that the quantity of terminal devices that need to monitor a paging message of the current paging in the first monitoring window is M, and M is greater than X, the network device indicates, by using the third indication information, that the quantity of terminal devices that need to monitor a paging message in the first monitoring window is X+N. For example, N may be 1, 2, or the like.

Implementation 3: The third indication information indicates that a quantity of bits occupied by first control information sent in the first monitoring window meets a preset relationship. Correspondingly, the terminal device may determine, based on the third indication information, that the quantity of bits occupied by the first control information meets the preset relationship, and then determine that a network side allows the terminal device that does not detect a paging message in the first monitoring window to receive a paging message by using the target time-frequency resource.

Further, that the quantity of bits occupied by the first control information meets the preset relationship may represent that the first control information includes information indicating the target time-frequency resource. Specifically, it is assumed that when the first control information does not include the information indicating the target time-frequency resource, the quantity of bits occupied by the first control information is Y. When the first control information includes the information indicating the target time-frequency resource, the quantity of bits occupied by the first control information is Y1. It may be understood that Y1 is greater than Y, and Y1=Y+Z, where Z is a quantity of bits occupied by the information indicating the target time-frequency resource. For example, when the information indicating the target time-frequency resource occupies 1 bit, Y1=Y+1. Further, the third indication information may indicate that the quantity of bits occupied by the first control information meets the preset relationship: Y+Z. The terminal device may determine, based on the third indication information, that the first control information includes the information indicating the target time-frequency resource, and determine that the network side allows the terminal device that does not detect a paging message in the first monitoring window to receive a paging message by using the target time-frequency resource.

The first control information may be carried in the paging message. Optionally, in addition to the information indicating the target time-frequency resource, the first control information may further include other paging-related information.

Optionally, when a structure of the paging message delivered during the current paging is similar to that of the paging message in S901 and S902, the first control information may be the control information described in S901 and S902. In this case, the first control information may include the second indication information, or may not include the second indication information. Alternatively, when the paging message is in one-to-one correspondence with the terminal device, the first control information may be located after the synchronization sequence and before the UE ID of the terminal device.

For the target time-frequency resource, the following describes several manners of allocating the target time-frequency resource provided in embodiments of this application.

Implementation 1: The network device sends fourth indication information to the terminal device, where the fourth indication information indicates the target time-frequency resource.

The fourth indication information may be carried in the first control information.

In a possible implementation, the fourth indication information may indicate index information corresponding to the preconfigured target time-frequency resource in a preset time-frequency resource configuration table. Specifically, a same time-frequency resource configuration table is preset for the network device and the terminal device, and in the time-frequency resource configuration table, different indexes correspond to different specific time-frequency resources. The network device indicates, to the terminal device by using the fourth indication information, an index corresponding to the target time-frequency resource in the time-frequency resource configuration table. Correspondingly, after receiving the fourth indication information, the terminal device determines, based on the index indicated by the fourth indication information, a specific time-frequency resource corresponding to the index in the time-frequency resource configuration table, and determines the specific time-frequency resource as the target time-frequency resource on which a paging message can be received.

Optionally, the fourth indication information may be index information corresponding to the preconfigured target time-frequency resource in a preset time-frequency resource configuration table. For example, the fourth indication information may be an index 1 in the preset time-frequency resource configuration table.

Optionally, the network device may send one or more pieces of fourth indication information to the terminal device. One piece of fourth indication information may indicate one or more specific time-frequency resources.

Optionally, the preset time-frequency resource configuration table may be one of one or more time-frequency resource configuration tables that are pre-agreed on by the network device and the terminal device. The network device may broadcast a supported time-frequency resource configuration table, to notify the terminal device to select, from the pre-agreed time-frequency resource configuration tables, the time-frequency resource configuration table broadcast by the network device as a time-frequency resource configuration table used to determine the target time-frequency resource during the current paging. Optionally, the supported time-frequency resource configuration table broadcast by the network device may be carried in a system message.

For example, the preset time-frequency resource configuration table may be shown in Table 1.

**Table 1**

| Index | Specific time-frequency resource |
|---|---|
| 1 | Specific time-frequency resources *Z*₁₁, Z₁₂, ..., and *Z*_{*1*n} |
| 2 | Specific time-frequency resources Z₂₁, Z₂₂ , ..., and Z₂ₙ |
| ... | ... |
| L | Specific time-frequency resources *Z_{L1} , Z_{L2} ,* ..., and *Z_{Ln}* |

In Table 1, n represents a quantity of specific time-frequency resources that can be indicated by one index, and n may be a positive integer. For example, if n=3, it indicates that in Table 1, one index may indicate three specific time-frequency resources. The index 1 may indicate three time-frequency resources: specific time-frequency resources Z₁₁, Z₁₂ , and Z₁₃ .

It may be understood that Table 1 is merely an example of a form of a time-frequency resource configuration table, and does not constitute a limitation on the preset time-frequency resource configuration table.

In another possible implementation, the fourth indication information may directly indicate a time-frequency domain position of the target time-frequency resource. For example, the fourth indication information may indicate a PF, a PO, and/or a monitoring window in which the target time-frequency resource is located. For another example, the fourth indication information may indicate an interval between the target time-frequency resource and the first monitoring window in time domain, for example, may indicate that the target time-frequency resource is a time-frequency resource occupied by a W^{th} monitoring window after the first monitoring window.

Implementation 2: The target time-frequency resource is configured in a manner of preconfiguration, pre-agreement, or protocol definition.

In this implementation, the location of the target time-frequency resource may be notified to the terminal device in advance. For example, a PF, a PO, and/or a monitoring window in which the target time-frequency resource is located may be preconfigured. For another example, it may be pre-agreed that the target time-frequency resource is a time-frequency resource occupied by a W^{th} monitoring window after the first monitoring window.

Correspondingly, after receiving the third indication information, the terminal device may determine that the network side allows a terminal device that does not detect a paging message in the first monitoring window to receive a paging message by using the target time-frequency resource. Therefore, when the terminal device does not detect a paging message for the terminal device in the first monitoring window, the terminal device may receive a paging message by using the target time-frequency resource. If the terminal device does not receive the third indication information, when the terminal device does not detect a paging message for the terminal device in the first monitoring window, the terminal device does not receive a paging message by using the target time-frequency resource.

The actions of the terminal device in steps S1701 and S1702 may be performed by the terminal device instructed by the processor 501 shown in FIG. 6 by invoking the application program code stored in the memory 502. The actions of the network device in steps S1701 and S1702 may be performed by the network device instructed by the processor 401 shown in FIG. 6 by invoking the application program code stored in the memory 402.

It may be understood that, in the foregoing embodiments, the method and/or step implemented by the terminal device may be implemented by a component (such as a chip or a circuit) that can be used in the terminal device, and the method and/or step implemented by the network device may be implemented by a component (such as a chip or a circuit) that can be used in the network device.

The foregoing mainly describes the solutions provided in embodiments of this application from a perspective of interaction between network elements. Correspondingly, an embodiment of this application further provides a communication apparatus, and the communication apparatus is configured to implement the foregoing methods. The communication apparatus may be the terminal device in the foregoing method embodiments, or an apparatus including the terminal device, or a component that can be used in the terminal device. Alternatively, the communication apparatus may be the network device in the foregoing method embodiments, or an apparatus including the network device, or a component that can be used in the network device.

It may be understood that, to implement the foregoing functions, the communication apparatus includes a corresponding hardware structure and/or software module for performing the functions. A person skilled in the art should be easily aware that, with reference to the example units and algorithm steps described in the embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module corresponding to each function may be obtained through division, or two or more functions may be integrated into one processing module. The integrated module may be implemented in a form of hardware, or may be implemented in a form of a software functional module. It should be noted that division into the modules in embodiments of this application is an example, and is merely logical function division. In actual implementation, there may be another division manner.

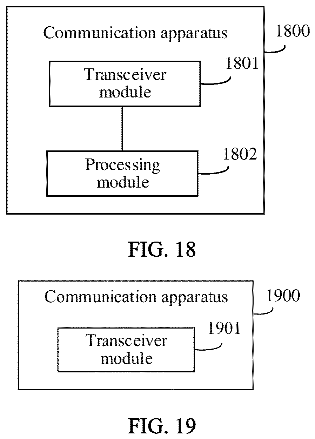

FIG. 18 is a diagram of a structure of a communication apparatus 1800. The communication apparatus 1800 includes a transceiver module 1801 and a processing module 1802. The transceiver module 1801 may also be referred to as a transceiver unit, is configured to implement receiving and sending functions, and for example, may be a transceiver circuit, a transceiver, a transceiver machine, or a communication interface.

For example, the communication apparatus 1800 is the network device in the foregoing method embodiments. In a possible design, the processing module 1802 is configured to determine a first condition that a terminal device supporting a low power wake-up receiver LP-WUS paging mode in a first cell needs to meet to perform the LP-WUS paging mode. The transceiver module 1801 is configured to send first indication information to the terminal device, where the first indication information indicates the first condition.

In another possible design, the processing module 1802 is configured to determine a plurality of target terminal devices that need to be paged. The transceiver module 1801 is configured to send a paging message to a first terminal device, where the first terminal device is any terminal device among the plurality of target terminal devices, and the paging message includes identification information of each of the plurality of target terminal devices and a synchronization sequence shared by the plurality of target terminal devices.

In another possible design, the transceiver module 1801 is configured to receive a message 3 Msg3 from a terminal device, where the Msg3 includes paging mode switching request information and identification information of the terminal device, and the paging mode switching request information is used to request to switch from a low power wake-up receiver LP-WUS paging mode to a legacy paging mode. The processing module 1802 is configured to determine, based on the identification information of the terminal device, that the terminal device is not a terminal device being paged by the network device. The transceiver module 1801 is further configured to send a message 4 Msg4 to the terminal device, where the Msg4 includes first identification information and the identification information of the terminal device, and the first identification information is used to identify a success in switching to the legacy paging mode.

In another possible design, the processing module 1902 is configured to determine that a quantity of terminal devices that actually need to monitor a paging message in a first monitoring window exceeds a maximum quantity allowed by the first monitoring window. The transceiver module 1801 is configured to send third indication information to a terminal device, where the third indication information indicates that a terminal device that does not detect a paging message in the first monitoring window is allowed to receive a paging message by using a target time-frequency resource, and the target time-frequency resource partially overlaps or does not overlap a time-frequency resource occupied by the first monitoring window.

All related content of each step in the foregoing method embodiment may be cited to a function description of a corresponding functional module, and details are not described herein again.

In this embodiment, the communication apparatus 1800 is presented in a form of obtaining each function module through division in an integrated manner. The "module" herein may be a specific ASIC, a circuit, a processor and a memory that execute one or more software or firmware programs, an integrated logic circuit, and/or another component that can provide the foregoing functions. In a simple embodiment, a person skilled in the art may figure out that the communication apparatus 1800 may be in the form of the network device shown in FIG. 6.

Specifically, a function/an implementation process of the transceiver module 1801 and the processing module 1802 in FIG. 18 may be implemented by invoking, by the processor 401 shown in FIG. 6, the computer-executable instructions stored in the memory 402. Alternatively, a function/an implementation process of the processing module 1802 in FIG. 18 may be implemented by invoking, by the processor 401 shown in FIG. 6, the computer-executable instructions stored in the memory 402, and a function/an implementation process of the transceiver module 1801 in FIG. 18 may be implemented by using the communication interface 403 shown in FIG. 6.

Because the communication apparatus 1800 provided in this embodiment may perform the foregoing communication method, for technical effects that can be achieved, refer to the foregoing method embodiments. Details are not described herein again.

FIG. 19 is a diagram of a structure of a communication apparatus 1900. The communication apparatus 1900 includes a transceiver module 1901. The transceiver module 1901 may also be referred to as a transceiver unit, is configured to implement receiving and sending functions, and for example, may be a transceiver circuit, a transceiver, a transceiver machine, or a communication interface.

For example, the communication apparatus 1900 is the terminal device in the foregoing method embodiments. In a possible design, the transceiver module 1901 is configured to receive first indication information from a network device, where the first indication information indicates a first condition that a terminal device supporting a low power wake-up receiver LP-WUS paging mode in a first cell needs to meet to perform the LP-WUS paging mode.

In another possible design, the transceiver module 1901 is configured to receive a paging message, where the paging message includes identification information of each of a plurality of target terminal devices and a synchronization sequence shared by the plurality of target terminal devices.

In another possible design, the transceiver module 1901 is configured to send a message 3 Msg3 to a network device, where the Msg3 includes paging mode switching request information and identification information of the terminal device, and the paging mode switching request information is used to request to switch from a low power wake-up receiver LP-WUS paging mode to a legacy paging mode. The transceiver module 1901 is further configured to receive a message 4 Msg4 from the network device, where the Msg4 includes first identification information and the identification information of the terminal device, and the first identification information is used to identify a success in switching to the legacy paging mode.

In another possible design, the transceiver module 1901 is configured to receive third indication information from a network device, where the third indication information indicates that a terminal device that does not detect a paging message in a first monitoring window is allowed to receive a paging message by using a target time-frequency resource, and the target time-frequency resource partially overlaps or does not overlap a time-frequency resource occupied by the first monitoring window.

All related content of each step in the foregoing method embodiment may be cited to a function description of a corresponding functional module, and details are not described herein again.

In this embodiment, the communication apparatus 1900 is presented in a form of obtaining each function module through division in an integrated manner. The "module" herein may be a specific ASIC, a circuit, a processor and a memory that execute one or more software or firmware programs, an integrated logic circuit, and/or another component that can provide the foregoing functions. In a simple embodiment, a person skilled in the art may figure out that the communication apparatus 1900 may be in the form of the terminal device shown in FIG. 6.

Specifically, a function/an implementation process of the transceiver module 1901 in FIG. 19 may be implemented by invoking, by the processor 301 shown in FIG. 6, the computer-executable instructions stored in the memory 302. Alternatively, a function/an implementation process of the transceiver module 1901 in FIG. 19 may be implemented by using the communication interface 303 shown in FIG. 6.

Because the communication apparatus 1900 provided in this embodiment may perform the foregoing communication method, for technical effects that can be achieved, refer to the foregoing method embodiments. Details are not described herein again.

It should be noted that one or more of the foregoing modules or units may be implemented by using software, hardware, or a combination thereof. When any one of the foregoing modules or units is implemented by using software, the software exists in a form of computer program instructions, and is stored in the memory. The processor may be configured to execute the program instructions and implement the foregoing method procedure. The processor may be built in a SoC (system on chip) or an ASIC, or may be an independent semiconductor chip. In addition to a core that is configured to execute software instructions to perform operations or processing, the processor may further include a necessary hardware accelerator, for example, a field programmable gate array (field programmable gate array, FPGA), a programmable logic device (programmable logic device, PLD), or a logic circuit that implements dedicated logic operations.

When the foregoing modules or units are implemented by using hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device, and the hardware may run necessary software or does not depend on software to perform the foregoing method procedures.

Optionally, an embodiment of this application further provides a chip system, including at least one processor and an interface. The at least one processor is coupled to a memory through the interface, and when the at least one processor executes a computer program or instructions in the memory, the method in any one of the foregoing method embodiments is performed. In a possible implementation, the communication apparatus further includes the memory. Optionally, the chip system may include a chip, or may include a chip and another discrete component. This is not specifically limited in embodiments of this application.

All or some of the foregoing embodiments may be implemented by software, hardware, firmware, or any combination thereof. When a software program is used to implement the embodiments, all or a part of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device such as a server or a data center that integrates one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

Although this application is described with reference to embodiments, in a process of implementing this application that claims protection, a person skilled in the art may understand and implement another variation of the disclosed embodiments by viewing the accompanying drawings, disclosed content, and appended claims. In the claims, the word "comprise" (comprising) does not exclude another component or step, and "a" or "one" does not exclude a meaning of plurality. A single processor or another unit may implement several functions enumerated in the claims. Some measures are recorded in dependent claims that are different from each other, but this does not indicate that these measures cannot be combined to produce a better effect.

Although this application is described with reference to specific features and embodiments, it is clear that various modifications and combinations may be made to this application without departing from the spirit and scope of this application. Correspondingly, this specification and the accompanying drawings are merely example description of this application defined by the appended claims and are considered to cover any and all modifications, variations, combinations, or equivalents in the scope of this application. It is clear that a person skilled in the art may make various modifications and variations to this application without departing from the spirit and the scope of this application. Thus, this application is intended to cover these modifications and variations, provided that they fall within the scope of the claims of this application and their equivalent technologies.

## Claims

1. A communication method, wherein the method comprises:
determining a first condition that a terminal device supporting a low power wake-up receiver LP- WUS paging mode in a first cell needs to meet to perform the LP-WUS paging mode; and
sending first indication information to the terminal device, wherein the first indication information indicates the first condition.

2. The method according to claim 1, wherein the first condition comprises: supporting the LP-WUS paging mode.

3. The method according to claim 1, wherein the first condition comprises: an identification number of the terminal device meets a preset relationship.

4. The method according to claim 1, wherein the first condition comprises: the terminal device has an energy saving requirement.

5. The method according to any one of claims 1 to 4, wherein determining the first condition that the terminal device supporting the low power wake-up receiver LP-WUS paging mode in the first cell needs to meet to perform the LP-WUS paging mode comprises:
determining the first condition based on a relationship between load of the first cell and a preset threshold.

6. A communication method, wherein the method comprises:
determining a plurality of target terminal devices that need to be paged; and
sending a paging message to a first terminal device, wherein the first terminal device is any terminal device among the plurality of target terminal devices, and the paging message comprises identification information of each of the plurality of target terminal devices and a synchronization sequence shared by the plurality of target terminal devices.

7. The method according to claim 6, wherein the paging message comprises second indication information, and the second indication information indicates a detection location corresponding to identification information of the first terminal device in the paging message.

8. The method according to claim 7, wherein the second indication information indicates a length of identification information of one or more target terminal devices corresponding to each detection location in the paging message.

9. The method according to claim 8, wherein each detection location in the paging message corresponds to identification information of one of the plurality of target terminal devices; and
that the second indication information indicates the length of the identification information of the one or more target terminal devices corresponding to each detection location in the paging message comprises:
the second indication information indicates, based on a ranking of the identification information of each target terminal device in the paging message, a length of the identification information of the one target terminal device corresponding to each detection location in the paging message.

10. The method according to claim 8, wherein each detection location in the paging message corresponds to identification information of one or more target terminal devices of a same length, and in identification information of the plurality of target terminal devices, identification information of target terminal devices of different lengths is arranged in a preset order in the paging message; and
that the second indication information indicates the length of the identification information of the one or more target terminal devices corresponding to each detection location in the paging message comprises:
the second indication information indicates, according to the preset order, a quantity of pieces of identification information of target terminal devices of each length in the paging message.

11. A communication method, wherein the method comprises:
receiving a message 3 Msg3 from a terminal device, wherein the Msg3 comprises paging mode switching request information and identification information of the terminal device, and the paging mode switching request information is used to request to switch from a low power wake-up receiver LP-WUS paging mode to a legacy paging mode;
determining, based on the identification information of the terminal device, that the terminal device is not a terminal device being paged; and
sending a message 4 Msg4 to the terminal device, wherein the Msg4 comprises first identification information and the identification information of the terminal device, and the first identification information is used to identify a success in switching to the legacy paging mode.

12. The method according to claim 11, wherein the method further comprises:
receiving a random access preamble from the terminal device, wherein the random access preamble is used to request to switch to the legacy paging mode; and
sending a message 2 Msg2 to the terminal device, wherein the Msg2 is used to configure a resource for sending the Msg3.

13. A communication method, wherein the method comprises:
determining that a quantity of terminal devices that actually need to monitor a paging message in a first monitoring window exceeds a maximum quantity allowed by the first monitoring window; and
sending third indication information to a terminal device, wherein the third indication information indicates that a terminal device that does not detect a paging message in the first monitoring window is allowed to receive a paging message by using a target time-frequency resource, and the target time-frequency resource partially overlaps or does not overlap a time-frequency resource occupied by the first monitoring window.

14. The method according to claim 13, wherein that the third indication information indicates that the terminal device that does not detect a paging message in the first monitoring window is allowed to receive a paging message by using the target time-frequency resource comprises:
the third indication information indicates that the quantity of terminal devices that need to monitor a paging message in the first monitoring window is greater than the maximum quantity allowed by the first monitoring window.

15. The method according to claim 13, wherein the third indication information indicates that a quantity of bits occupied by first control information sent in the first monitoring window meets a preset relationship, and that the quantity of bits occupied by the first control information meets the preset relationship represents that the first control information comprises information indicating the target time-frequency resource.

16. The method according to any one of claims 13 to 15, wherein the method further comprises:
sending fourth indication information to the terminal device, wherein the fourth indication information indicates the target time-frequency resource.

17. The method according to claim 16, wherein the fourth indication information indicates index information corresponding to the target time-frequency resource in a preset time-frequency resource configuration table.

18. A communication apparatus, wherein the communication apparatus comprises a module or a unit configured to implement the method according to any one of claims 1 to 17.

19. A communication apparatus, wherein the communication apparatus comprises a processor, the processor is configured to execute instructions stored in a memory, and when the instructions are run by the processor, the communication apparatus is enabled to perform the method according to any one of claims 1 to 17.

20. The apparatus according to claim 19, wherein the communication apparatus further comprises the memory.

21. A computer-readable storage medium, wherein the computer-readable storage medium stores instructions, and when the instructions are executed by a computer, the method according to any one of claims 1 to 17 is performed.

22. A computer program product, wherein the computer program product comprises instructions, and when the instructions are executed by a computer, the method according to any one of claims 1 to 17 is performed.

23. A chip, wherein the chip comprises a processor, and the processor is configured to run instructions, to enable an apparatus comprising the chip to perform the method according to any one of claims 1 to 17.

24. The chip according to claim 23, wherein the chip further comprises a memory, and the memory is configured to store the instructions.

25. A communication system, wherein the communication system comprises a terminal device and a network device, and the network device is configured to perform the method according to any one of claims 1 to 17.
